# EUROPEAN PATENT SPECIFICATION

(11) **EP 3 316 260 B1**
(45) Date of publication and mention of the grant of the patent: **19.11.2025**
(21) Application number: 16814794.0
(22) Date of filing: 10.06.2016
(51) Int. Cl.: G21C 7/36, G05B 9/03

(54) **SAFETY CONTROL SYSTEM FOR NUCLEAR POWER PLANT**
SICHERHEITSKONTROLLSYSTEM FÜR KERNKRAFTWERK
SYSTÈME DE COMMANDE DE SÉCURITÉ D'UNE CENTRALE NUCLÉAIRE

(30) Priority: 25.06.2015 RU 2015125045
(43) Date of publication of application: 02.05.2018
(73) Proprietor: Federal State Unitary Enterprise "All - Russian Research Institute Of Automatics", Moscow 127055 (RU)
(72) Inventor: KISHKIN, Vladimir L'vovich, Moscow 115172 (RU); NARITS, Aleksandr Dmitrievich, Moscow 109451 (RU); MOISEEV, Mikhail Ivanovich, Moscow 129090 (RU); NOVIKOV, Aleksey Ivanovich, Moscow 115280 (RU); KARPOV, Petr Sergeevich, Moscow 127543 (RU); TIMOKHIN, Dmitriy Sergeevich, Moscow 117513 (RU); GRITSENKO, Stanislav Yur'evich, Moscow 125239 (RU); MEYLAKHS, Artem L'vovich, Moscow 121351 (RU); NOVIKOV, Aleksandr Aleksandrovich, Moscow 125480 (RU)
(74) Representative: Friese Goeden Patentanwälte PartGmbB
(86) International application number: PCT/RU2016/000355
(87) International publication number: WO 2016/209113

(56) References cited:
- RU-C1- 2 150 756
- RU-C1- 2 431 174
- RU-C2- 2 356 111
- US-A- 5 745 539
- US-A- 5 984 504
- US-A- 6 049 578
- US-A1- 2011 209 021
- US-A1- 2011 313 580

## Description

The invention relates to automatics and computer engineering, and can be used in I&C systems of nuclear power plants (NPP) for constructing control safety systems (CSS) of NPP.

A digital plant protection system is known (U.S. Patent No. 6049578, IPC G21C 7/36, published on April 11, 2000, analog), which consists of four identical processing & control channels that provide detection of a trip condition at a facility by means of comparison of measured parameter values with predetermined setpoints and execution of user-specified remedial actions in case the parameters are out-of-specification. Safety channels, physically separated from one another, are cross-connected with each other by optical fiber communication paths. Each channel includes analog and digital sensors associated with this channel; analog-to-digital converters that provide at the output digital representation of the measured analog signals; a bistable processor; a coincidence logic processor, and a logic processor initiating actuation mechanisms (AM) and automatic safety features of a reactor. The bistable processor accepts digital values of measured signals of its own channel, convert them into the process-dependent parameters, checks measured parameters for deviation beyond the predetermined limits, generates for each parameter a binary sign of deviation, transmits these signs via optical fiber lines to other processing & control channels. The coincidence logic processor receives from the bistable processor of its channel the binary signs of parameters deviation for the signals of this channel, and receives via optical fiber lines from the other channels the binary signs of deviation for the respective parameters. For every parameter the coincidence logic processor checks receipt of signs of beyond-limit deviation of 2 out of 4 channels. If the coincidence processor detects deviation from the permissible values of the parameters for 2 out of 4 channels, then initiation logic processor generates needed signals for reactor trip and for actuation of digital safety features.

The prior art has the following disadvantages. Data exchange between channels by optical fiber communication paths and processing of these data by the majority redundancy principle "2 out of 4" shall be carried out only at the initial stage of the process sensors input signals collection and processing. This decreases the protection system reliability and can lead to occurrence of false protection and control commands in the safety channels due to failures in actuation mechanism control initiation and processing logics.

The applied system software is distributed between several processors executing individual protection tasks. This decreases reliability, complicates the applied protection programs and hinders development of the applied software by automated means, which allow excluding the program errors at a level of applied algorithms that lead to common cause failures in all protection system channels.

The protection system has a major disadvantage due to the fact that safety channels are built using the same digital processing & control hardware and basic & system software. This can lead to common cause failures of all the channels of the protection system due to latent faults in programmable equipment and encapsulated errors of basic and system software.

A digital control safety system (DCSS) of nuclear power plant together with a method of safety parameters provision is known (RU patent No. 2356111, IPC G21C7/36, published in 2009, prototype), which consists of three separate identical safety channels executing evaluation of a facility state by means of the analysis of the parameter values received from the process sensors and forming control protective actions in case of emergency situation. Physically separated safety channels are cross-connected with each other by optical fiber communication paths. Each channel includes an input device, comparator, control action generating device, lockout selection device, and actuation mechanisms control device. The input device executes input of analog signals of the process and their conversion into digital form. The comparator compares read out parameter values with pre-determined digital values and starts the device generating control signals, based on which the lockout selection device initiates generation of actuation mechanism control signals.

This safety system has the following disadvantages.

The applied program in the DCSS channel is distributed by several digital processing devices which decreases reliability and complicates automated development of the applied program software to exclude common cause failures due to the errors in the applied algorithms. Safety channels have similar structure and are implemented using the same software & hardware means which can lead to common cause failure due to latent faults in digital equipment and encapsulated errors of basic and system software.

Each digital processing device of the safety channel in DCSS is cross-connected via interchannel optical lines with each respective device in other channels, forming 4 levels of interchannel communication paths and majority redundancy of the safety channel devices. This majority redundancy of equipment of each of several processing and control devices is not effective, since this equipment makes an insignificant part of the whole channel equipment and thus its majority redundancy does not lead to significant increase in the control safety system reliability, but requires additional hardware for inter-channel links. Besides, the majority redundancy does not cover equipment of commands creation and transmission to the actuation mechanism control equipment.

A control safety system (USA patent Pub. No.: US 2011/0313580 A1, Pub/ Date: Dec. 22, 2011) is known, which is implemented on the basis of a platform and a method of creation of safety-critical automated protection and control systems represented in this patent. The system consists of the CSS actuating part (protective actions initiating system) and priority control modules. The initiation system carries out evaluation of the object state based on the information coming to the system in the form of analog and binary signals of process sensors which are converted to digital parameters, and creates protective actions in case of emergency situation in the form of commands transmitted from the initiation system to the priority control modules.

The initiation system consists of 4 safety channels, each of which consists of two subchannels A, B (of subsystems V₁, V₂) executing all functions of the initiation system and being mutually redundant. Subchannels are implemented based on hardware and software means meeting the diversity requirements. Each four subchannels A and four subchannels B are also redundant according to the majority principle "2 out of 4".

Each subchannel of the initiation system contains analog and digital signals input modules located in the Signal Forming Cabinet SFC 10, central logic module located in the Cabinet SFC 5 and M priority control modules located in the Remote Control Cabinet RCC. Modules are implemented based on FPGA and have logic devices and communication devices in their composition. Logic devices of modules execute processing of signals received from the process sensors, or process parameters received from other modules, execute functions of formation and transmission of control signals to actuation mechanisms AM. Via communication devices the direct radial links are established between central logic module of subchannel in cabinet 5, each input-output module in cabinet 10 of subchannel and each M priority control module in remote cabinets RCC. These radial links according to the description of the invention are implemented via "several" bidirectional ports of interface LVDS of the communication device of the central logic module and one bidirectional port LVDS of communication device in each input-output module and priority control module using the electric duplex cables inside cabinets and optical fiber duplex cables between cabinet 5 and cabinet 10, between cabinet 5 and remote cabinets RCC.

According to evaluation performed based on the experience of development, production and operation of the nuclear power plant control safety systems for detection of NPP emergency state and execution of protective actions the CSS must have in each channel of up to 64 input-output modules and up to M = 1232 priority control modules according to the same number of N necessary actuation mechanisms AM. These amounts of modules were set as initial data at development of the latest commissioned CSS of TSHF-SS represented for patenting. At that, the input-output and control modules by types, functional possibilities, number of measuring channels, number of output signal reproduction channels and control signals are not incommensurate with input-output and control modules of the automation platform under the USA patent Pub. No.: US 2011/0313580 A1, Pub/ Date: Dec. 22, 2011.

Taking the mentioned above scopes of the required peripheral equipment into account, creation of the real CSS according to methods stated in this patent is connected with significant expenses for data transmission equipment and long length external optical fiber cables necessary for connection of central cabinets, containing logic modules, with cabinets containing input-output modules and especially with remote modules containing up to M priority control modules.

A number of optical cables n₁ with two optical fibers of bidirectional data transmission between cabinets with central logic modules and cabinets with input-output modules for the four-channel CSS represented in the patent must be n₁ = 64 × (n₁₁ + n₁₂), where n₁₁ = 2 is a number of subchannels (diversities), n₁₂ = 4 is a number of channels, i.e. n₁ = 512 optic cables. A number of such optic cables n₂ for data transmission between cabinets with central logic modules and cabinets with M priority control modules must be n₂ = M × n₂₁, where n₂₁ = 2 is a number of bidirectional ports of LVDS interface in the priority control module for reception of commands from two control centers - central logic modules of subchannels A and B and back transmission of data on the actuation mechanisms state to these modules, which is shown in the priority control logics, US Patent Number: 5,745,539, Date of Patent: Apr. 28, 1998. Consequently, these optic cables can be required in amount of up to n₂ = 1,232 × 2 = 2,464. A total number of links and optic cables n between central logic modules and input-output and priority control modules can reach n = n₁ + n₂ = 1,232 + 2,464 = 3,696.

The other disadvantage of the method of safety system creation according to this invention is non-optimal organization of majority redundancy in 4 subchannels A and 4 subchannels B of the initiation system by means of placing the voting function "2 out of 4" in the central logic module and transmission of the output control commands created in this function from subchannels to the priority logics of each of M priority control modules. At that, the equipment for communication and AM control commands transmission between central logic module and voting priority control modules, including multiple optical fiber links, are not redundant by majority logics "2 out of 4", which highly likely exclude failures leading to non-delivery of protection commands and delivery of commands triggering false protection initiation. Redundancy of this part of CSS equipment is implemented only by selective logics of commands coming from two subchannels in the priority control module according to "1 out of 2" rule. But action of this rule as compared to majority selection double increases a probability of false command delivery due to a possible issue of false command by each of 2 subchannels non-redundant in this part of equipment by majority method.

This invention eliminates the above mentioned disadvantages.

Technical results of the invention are:
- exclusion of common cause failures of all safety channels in the multi-channel (3 or 4 channels) control safety system owing to including in each safety channel of two mutually independent redundant subsystems - safety subchannels A and B, built based on the hardware & software platforms meeting the diversity requirements and executing all functions of safety channel,
- enhancement of multichannel control safety system (CSS) reliability due to double redundancy of equipment of each channel in the form of subchannels A and B,
- enhancement of stability to common cause failures and reliability due to application for the process and control input data processing of one central processing module in each subchannel, which makes it possible to use the automation means excluding encapsulated errors of programs for development of the CSS applied software,
- enhancement of multichannel control safety system reliability due to organization of majority redundancy logics in the firm of functions "2 out of N" (N = 3 or 4) at two levels: in the central processor module located in one of central cabinets and in the remote cabinets with functional control modules directly before the input ports of these control modules,
- enhancement of CSS reliability and significant decrease in expenses for CSS equipment mounting on the power unit by enlargement of CSS platform including the central processor modules and functional input-output and control modules of different types, due to a number of additional communication modules of the input-output bus installed in the cabinet crates along with the functional modules at site and providing replacement of external optical links of the long length input-output bus between the power unit cabinets with shorter printed circuit tracks inside crates and with twisted pairs inside cabinets implemented and checked under production conditions,
- reduction of recovery time and increase of CSS availability due to creation of safety subchannels based on the fail-free and well diagnosed input-output bus implemented based on the communication modules and duplex serial interfaces of "point-to-point" type in the form of a "tree"-type structure, the root node of which is the automation processor module, and the end nodes - functional modules
- significant decrease in expenses and time for CSS development, which, according to its construction principles, is provided by a possibility to create the control safety system by project-oriented way with practically any required composition and number of input and output analog and digital signals and actuation mechanism control signals on the basis of enlarged automation platform all modules of which are implemented in the form of unified replacement modules to be installed in the standard crates of the instrument cabinets, thus providing practically unlimited extension of the necessary equipment of the control safety system.

The technical results are achieved by the fact that in the control safety system for use in nuclear power plant, comprising a plurality of identical safety channels, each said channel includes process signal input-output stations IOS 1-n, actuation mechanism priority control stations PCS1-m, that are connected with the main control room MCR and emergency control room ECR, safety features automation controller SF AC, safety features input/output bus SF IOB for SF AC controller data exchange with IOS and PCS stations, and is cross-connected with other safety channels by means of duplex optical fiber communication paths,
input-output stations IOS, priority control stations PCS and safety features automation controller SF AC of each of N safety channels (N = 4 is taken for description), contain two mutually independent hardware & software sets: subchannel A and subchannel B built based on different hardware and software platforms according to the diversification principle; each subchannel executes all functions of a safety channel from input of process signals to output of actuation mechanism control and process signals;
each controller SF AC of the control safety system channel contains a controller SF AC A of subchannel A and controller SF AC B of subchannel B each of which is connected, respectively, to controllers SF AC A, SF AC B of other safety channels via interprocessor interfaces IPI A and IPI B of 'point-to-point' type built based on Ethernet interface and data-level communication protocol, thus creating the first level of majority redundancy according to the data selection function "2 out of 4" (with N = 4 taken for description) from input-output modules of the own channel and other safety channels received from these channels via interprocessor interfaces IPI A and IPI B;
controllers SF AC A and SF AC B are also connected with the normal operation system via redundant switch system bus EN of normal operation built based on the Ethernet interface, ring structure of net switches connection and data-level communication protocol, with the main control room MCR and emergency control room ECR via interprocessor interface communication lines IPI1 A, IPI1 B and IPI2 A, IPI2 B, respectively, built based on Ethernet "point-to-point" type interface and data-level communication protocol, with IOS1 - n and PCS1 - m stations of the safety channel and with PCS1 - m stations of other safety channels via I/O bus, respectively, SF IOB A of subchannel A and SF IOB B of subchannel B;
each of SF IOB A and SF IOB B buses has a "tree"-type structure, the upper root node of which is, respectively, automation processor module SF APM A of SF AC A controller and SF APM B of SF AC B controller, and the low end nodes are modules of communication with the process MCP of IOS1 - n stations and priority control modules PCM of PCS1 - m stations, and intermediate nodes are communication modules built based on the hardware logics and FPGA and executing the functions of branching the downward command flow and data from root node - module SF APM to end nodes - module MCP, PCM, and the function of concentrating the upward data flow from modules MCP, PCM to module SF APM, links between modules in the nodes of SF IOB A bus and links between modules in the nodes of SF IOB B bus are implemented as the lines of serial duplex "point-to-point"-type interface for transmission of the downward command flow and data along one line and the upward data flow along the other line;
all modules are structurally made as unified replacement modules, and IOS station, PCS station and SF AC controller including SF AC A controller of subchannel A and SF AC B controller of subchannel B - as unified crates located in individual cabinets for stations IOS1 - n, stations PCS 1 - m, controllers SF AC, maximum 4 crates per cabinet according to N = 4 safety channels.

Stations IOS1 - n in cabinets create groups of 4 stations connected to controllers SF AC A, SF AC B of the same safety channel via adjacent branches of buses SF IOB A, SF IOB B of this channel and differing only in destination addresses of modules MCP inside channels, stations PCS 1 - m in cabinets create groups of 4 stations connected to controllers SF AC A, SF AC B of four safety channels via the same branches of buses SF IOB A, SF IOB B of these channels, differing only in destination addresses of modules PCM inside a group and between groups.

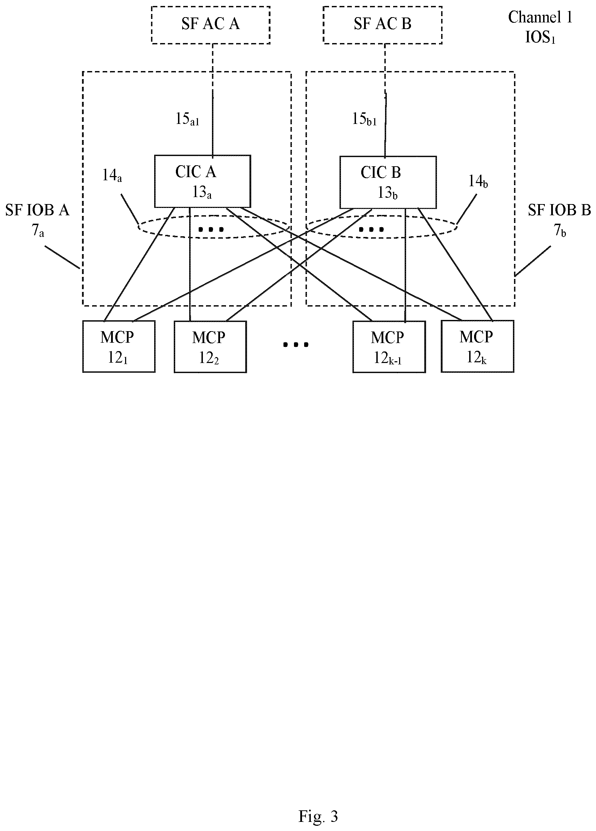

Input-output station IOS contains modules of communication with the process MCP1 - k, and two communication modules - converters of interfaces: CIC A of SF IOB A bus of subchannel A and CIC B of subchannel B, each module CIC A and CIC B are connected via one external communication line of the module, respectively, via SF IOB A and SF IOB B bus, with its own automation controller SF AC A and SF AC B and via k (k = 16 max.) intra-station lines of branching with each module MCP1-k;
Modules of communication with the process MCP1-k contain internal diversity and redundancy means: safety feature micro-controller SF MC A (21a) of subchannel A and micro-controller SF MC B (21b) of subchannel B, executing functions of input and preliminary processing of input process signals digital values and functions of reproduction of output process signals, micro-controllers SF MC A, SF MC B via communication modules CIC A and CIC B are connected via one external line of buses (beyond cabinets) SF IOB A (7a) and SF IOB B (7b) (fig. 3) of these modules, respectively, to controller SF AC A of subchannel A and SF AC B of subchannel B.

Communication modules CIC A, CIC B provide reduction of long-length optical fiber communication lines by buses SF IOB A, SF IOB B between each cabinet with modules MCP and cabinet with controllers SF AC A, SF AC B by k times (k = 16 max.) through replacement of direct external communication lines of automation controllers SF AC A, SF AC B with each module MCP1 - k in the cabinet with 2 external communication lines with each of 4 stations IOS of the cabinet and their branching in modules CIC A, CIC B of each station IOS with intra-station communication lines with each module MCP1 - k of station.

Each priority control station PCS1-m contains priority control modules PCM1-e, communication modules of SF IOB A bus of subchannel A and SF IOB B bus of subchannel B: voting communication modules VCM A, VCM B transmitting the input commands to the voting modules VM A, VM B, executing selection of input commands from N = 4 subchannels A, N = 4 subchannels B of safety according to "2 out of 4" voting principle for each module PCM1-e, thus creating in each station PCS1--m the 2nd level of majority redundancy directly before transmission of data and control command selected according to the voting principle to each module PCM1-e of station PCS1 - m.

Stations PCS are combined into groups, a number of stations PCS in a group is determined by the number of safety channels N = 4, for stations PCS1 - 4 of a group from a plurality of stations PCS1 - m are connected with controllers SF AC A of subchannel A and SF AC B of subchannel B via segments of bus SF IOB A and SF IOB B individual for each group.

In subchannel A of safety channel 1 the first station PCS1 of channel 1 in group 1 of the first stations of safety channels by out-group communication line (outside cabinets) SF IOB A is connected with controller SF AC A of its safety channel 1, the first stations PCS 2-4 of safety channels 2 - 4 in group 1 are connected with controllers SF AC A of other safety channels 2 - 4 by out-group communication lines, communication module VCM A (25a) of each station PCS1 - 4 of a group by intra-station communication line is connected with voting switch module VM A of its station PCS and by intra-group communication lines (inside cabinets) with communication modules VM A of other stations PCS of a group, communication module VM A of each station PCS 1 - 4 of a group is connected by branching lines SF IOB A with priority control modules PCM1-e of this station.

In subchannel B of each safety channel the links of modules PCM1-e, stations PCS 1 - 4 of group 1 of the first stations of safety channels 1 - 4 with automation controllers SF AC B of each safety channel by segment of SF IOB B (7b) bus are implemented similarly to links of group 1 of the first stations of safety channels 1 - 4 with automation controllers SF AC A of each safety channel by SF IOB A bus of subchannel A;
a group 2 of the second stations PCS 1 - 4 of channels 1 - 4, a group 3 of the third stations PCS 1 - 4 of channels 1 - 4, ..., are connected with controllers SF AC A of channels 1 - 4 by segments of SF IOB A bus individual for each group and with controllers SF AC B of channels 1 - 4 by segments of SF IOB B bus individual for each group the way a group 1 of the first stations PCS 1 - 4 is connected with controllers SF AC A of channels 1 - 4 by segment of SF IOB A bus and with controllers SF AC B of channels 1 - 4 by segment of SF IOB B bus;

Priority control modules PCM1-e of stations PCS contain internal diversification and redundancy features: FPGA of safety features SF FPGA A of subchannel A and SF FPGA B of subchannel B which are connected, respectively, via wire communication lines with MCR and ECR via intra-station lines of bus SF IOB A with communication modules VM A of subchannel A and via intra-station lines of bus SF IOB B with communication modules VM B of subchannel B and execute algorithms of control and adjustment of actuation mechanisms AM according to priorities of subchannels A, B set by the priority control logics in PCL FGPA of the module, by commands from automation controllers SF AC A. SF AC B received by them via segments of buses SF IOB A, SF IOB B;
Communication modules VM A, VM B provide reduction of long-length optical fiber external communication lines by buses SF IOB A, SF IOB B between each cabinet with modules PCM and cabinet of each safety channel with controllers SF AC A, SF AC B by e times (e = 14 max.) by means of replacement of the necessary direct external optical fiber communication lines of automation controllers with each module PCM in cabinet with 2 external communication lines of each station PCS by buses SF IOB A, SF IOB B in each group of stations PCS 1 - 4, respectively, with controllers SF AC A, SF AC B, and branching of these lines in voting modules VM A, VM B of stations by "e" of intra-station communication lines with each module PCM1-e.

Grouping of stations PCS by 4 stations PCS 1 - 4 connected to controllers SF AC A and SF AC B via the same branches of bus SF IOB A and bus SF IOB B of channels 1 - 4 provides implementation of inter-channel links inside cabinets containing stations PCS; at that, it does not require increase in a number of external links of these cabinets with cabinets of controllers SF AC A, SF AC B of safety channels by 4 times.

Automation controller SF AC A of subchannel A of each channel of the four-channel safety system contains automation processor module APM SF A and communication branching modules BM-4 A and SF IOB A bus in amount of "p" set for definiteness as p = 11 max., connected via communication lines of SF IOB A bus with automation processor module APM SF A;
modules APM SF A of channels 1 - 4 are connected via their first communication modules BM-4 A: via 4 branching lines with communication modules CIC A of four stations IOS1 - 4 of groups 1 - 4 of their safety channels;
modules APM SF A of channels 1 - 4 are connected via their second, third communication modules BM-4 A with communication modules CIC A of the following groups: 5 - 8, 9 - 12 by 4 stations IOS in a group; providing along with the first modules BM-4 A the connection to modules SF APM A of four subchannels A of up to 12 groups of stations IOS, i.e. up to 48 stations IOS each containing up to k = 16 modules MCP 1-k.

Modules APM SF A of channels 1 - 4 are connected via fourth communication modules BM-4 A: via first branching lines of these modules of SF IOB A bus with four modules VCM A of the first group of stations PCS1 - 4, via second branching lines of these modules of SF IOB A bus - with four modules VCM A of the second group of stations PCS1 - 4 , ... , via fourth branching lines - with four modules VCM A of the fourth group of stations PCS1 - 4.

Modules SF APM A of channels 1 - 4 via the fifth - eleventh communication modules BM-4 A are connected via branching lines of these modules with modules VCM A of the fifth - thirty second group of stations PCS1-4, thus providing along with the fourth modules BM-4 A the connection to modules SF APM A of four subchannels A of up to 32 groups of stations PCS, i.e. up to 128 stations PCS, each containing up to e = 14 modules PCM1-e.

Automation controller SF AC B (2b) of subchannel B of each channel of the four-channel safety system contains automation processor module APM SF B and communication modules BM-4 B and SF IOB B buses in amount of "p", set for definiteness of p = 11 max., connected via communication lines of SF IOB B bus with automation processor module APM SF B;
modules APM SF B of channels 1 - 4 via their 3 communication modules BM-4 A are connected via 4 branching lines of each module, similar to modules APM SF A, with 12 groups of stations IOS, i.e. up to 48 stations IOS, each containing up to k = 16 modules MCP 1-k.

Modules APM SF B of channels 1 - 4 via their 8 communication modules BM-4 are connected via 4 branching lines of each module, similar to modules APM SF A, with 32 groups of stations PCS1 - 4, i.e. up to 128 stations PCS, each containing up to e = 14 modules PCM1-e.
The control safety system CSS of nuclear power plants, represented for patenting, is implemented based on the extended automation platform, which includes, apart from the central processor automation modules, functional input-output modules and actuation mechanism control modules a number of communication modules of input-output buses implemented based on FGPA, as well as the unified crates and cabinets for location of such modules made as the replacement modules.

The extended automation platform provides CSS development for automation of protection of any power units in a project-oriented way with optimal implementation of links of the automation controllers SF AC A, SF AC B with the functional modules MCP, PCM inside cabinets in production and between cabinets in power unit. This significantly decreases expenses and time for CSS development and commissioning. Depending on a number of input and output analog and digital signals of the automation facility and actuation mechanisms to the automation controllers SF AC A. SF AC B of each safety channel the corresponding number "p" (p = 11 max.) of branching modules BM-4 A and "p" of modules BM - 4 B of buses SF IOB A, SF IOB B are installed each with 4 branching lines, via which stations IOS, PCS are connected in the input-output and control cabinets in a necessary amount according to the project.

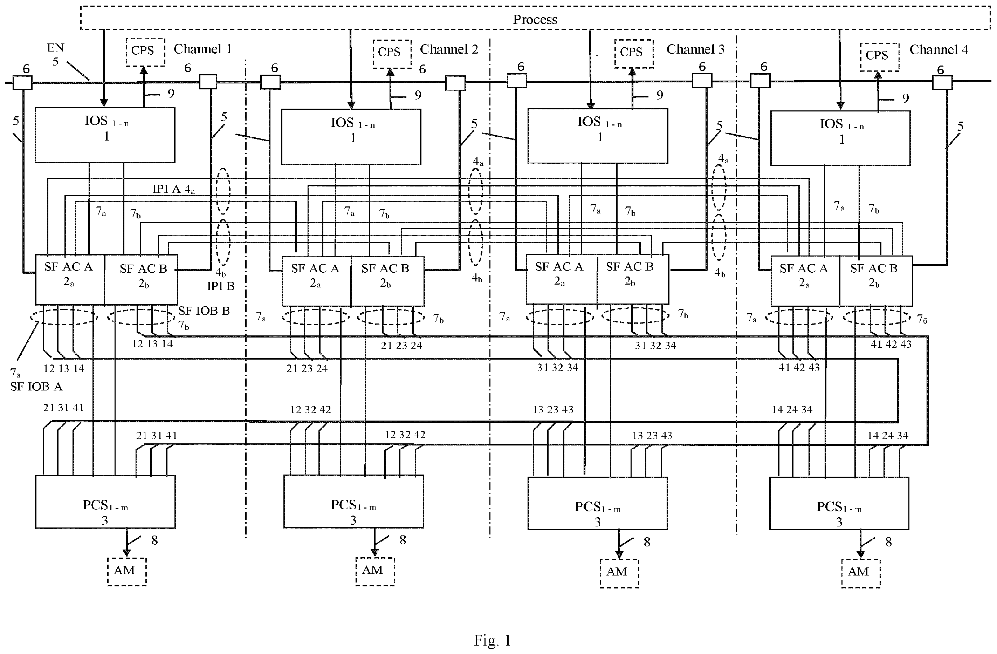

The matter of the invention is elucidated in Figures 1 - 8.

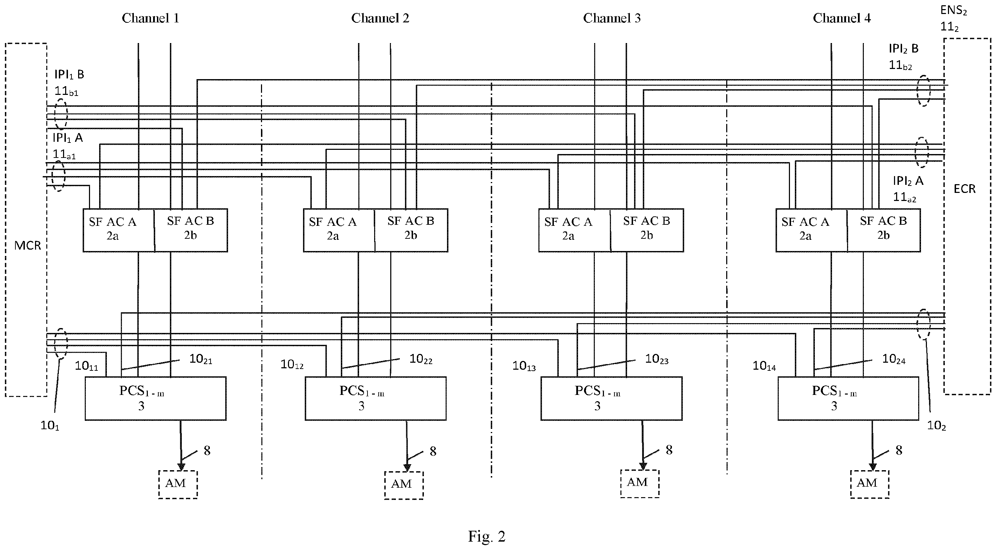

Figures 1 and 2 show block diagram of the four-channel control safety system CSS structure, where: 1 are I/O stations I0S_{1 - n}, n is a number of IOS stations in one CSS channel; 2ₐ is a safety system automation controller SF AC A of subchannel A; *2_{b}* is a safety system automation controller SF AC B of subchannel B; 3 are priority control stations PCS _{1 - m}, m is a number of PCS stations in one CSS channel; *4ₐ* is an interprocessor interface IPI A of communication of SF AC A controllers of each safety channel with SF AC A of the other safety channels; *4_{b}* is an interprocessor interface IPI B of communication of SF AC B controllers of each safety channel with SF AC B of the other safety channels; 5 is a redundant bus EN of normal operation; 6 are net switches of EN bus; 7ₐ is safety I/O bus SF IOB A of subchannel A; 7_{b} is safety I/O bus SF IOB B of subchannel B; 8 are actuation mechanism control signals; 9 are control signals for control and protection system CPS; *10*₁ are wire lines of communication of PCS stations of each CSS channel with the MCR; *10*₂ are wire lines of communication of PCS stations of each CSS channel with the ECR; *11*ₐ₁ are IPI₁ A buses of each safety channel SF AC A controllers communication with the MCR; *11*ₐ₂ are IPI₂ A buses of each safety channel SF AC A controllers communication with the ECR; *11*_{b1} are IPI₁ B of each safety channel SF AC B controllers communication with the MCR; *11*_{b2} are IPI₂ B of each safety channel SF AC B controllers communication with the ECR.

Figure 3 shows block diagram of I/O station IOS (using the example of IOS: station of channel 1), where: *7ₐ* is a segment of I/O bus SF IOB A of subchannel A; 7_{b} is a segment of I/O bus SF IOB B of subchannel B; *12*₁ - *12*ₖ are modules of communication with the process MCP, k is a number of MCP modules in IOS station; *13* is communication module CIC A of subchannel A; *14* are communication lines of CIC A module *13* of subchannel A with MCP modules *12*₁ - *12*ₖ via SF IOB A bus *7*ₐ; *15*₁ is communication line of CIC A module *13* of IOS₁ station with automation controller SF AC A via SF IOB A bus *7ₐ. 16* is communication module CIC B of subchannel B; 17 are communication lines of CIC B module *16* of subchannel B with MCP modules *12*₁ - *12*ₖ via SF IOB B bus *7*_{b}; *18*₁ is communication line of CIC B module *16* of IOS₁ station with automation controller SF AC B via SF IOB A bus *7*_{b}.

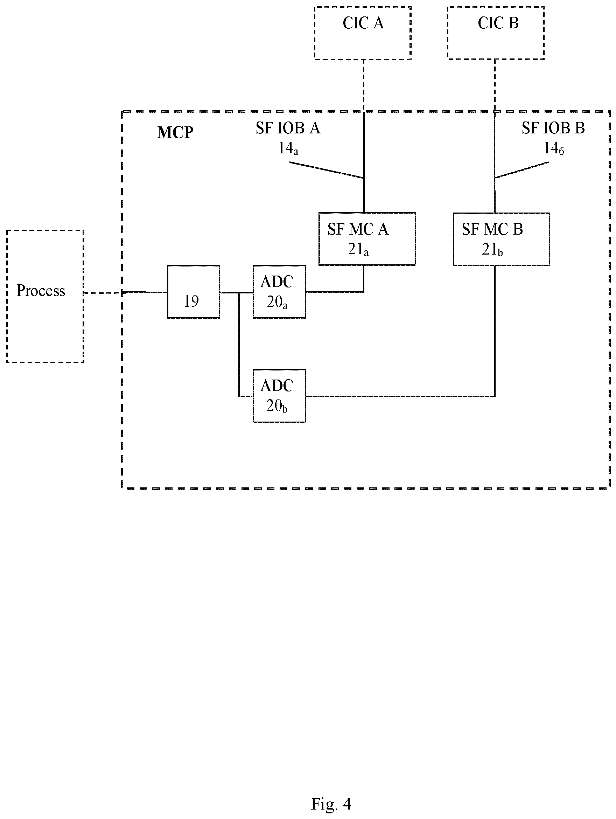

Figure 4 shows block diagram of MCP module of analog signals input, where: *14* is communication line of safety feature processor SF CPU A *21* of subchannel A with CIC A module via SF IOB A; *17* is communication line of safety feature processor SF CPU B *22* of subchannel B with CIC B module via SF IOB B; *19* are input circuits of MCP module; *20* is analog-to-digital converter ADC; *21* is safety feature processor SF CPU A of subchannel A; 22 is safety feature processor SF CPU B of subchannel B.

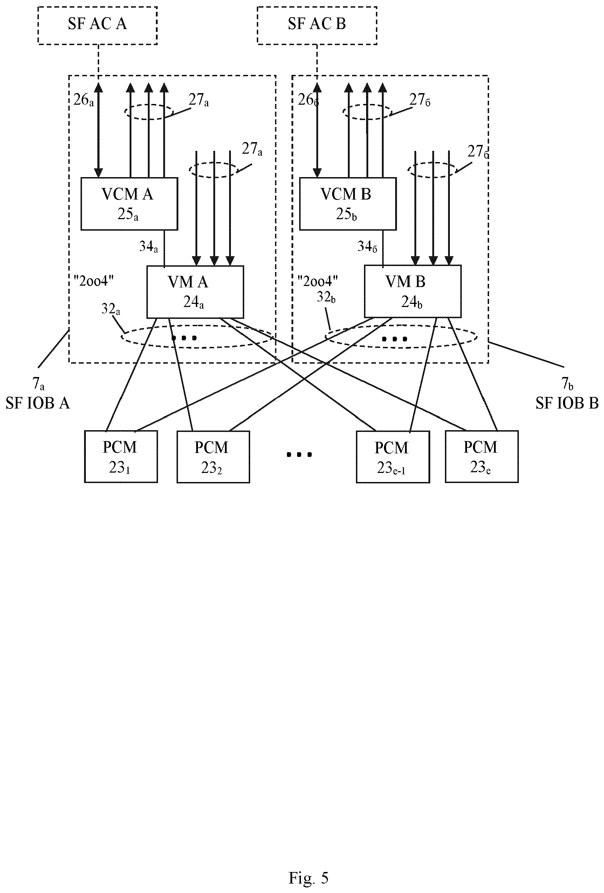

Figure 5 shows variant of a priority control station PCS block diagram (using the example of PCS station being part of a group of 4 stations connected with SF AC of each of the 4 channels via one line of the SF IOB), where: *7*ₐ is a segment of SF IOB A bus of subchannel A; *7*_{b} is a segment of SF IOB B bus of subchannel B; *23*₁ - *23*ₑ are priority control modules PCM, *e* is a number of PCM modules in PCS station; 24 is voting communication module according to principle '2 out of 4' VM A of subchannel A; 25 is communication module VCM A of subchannel A; *26* is a line of VCM A 25 communication with SF AC A controller of its own or other safety channel via SF IOB A bus 7ₐ; *27* are interstation communication lines of VCM A (VM A) modules of PCS station of the group with VM A (VCM A) modules of the other 3 stations of the group via SF IOB A bus; 28 is voting communication module VM B of subchannel B; *29* is communication module VCM B of subchannel B; *30* is a line of VCM B *29* communication with SF AC B controller of its own or other safety channel via SF IOB B bus *7*_{b}; *31* are interstation communication lines of VCM B (VM B) modules of PCS station of the group with VM B (VCM B) modules of the other 3 stations of the group via SF IOB B bus; 32 are lines of VM A module *24* communication via SF IOB A bus *7*ₐ with modules PCM *23*₁ - *23*ₑ; *33* are lines of VM B module *28* communication via SF IOB B bus *7*_{b} with modules PCM *23*₁ - *23*ₑ; *34* is a line of VCM A module *25* communication with VM A module of its PCS station; *35* is a line of VCM B module *28* communication with VM B module of its PCS station.

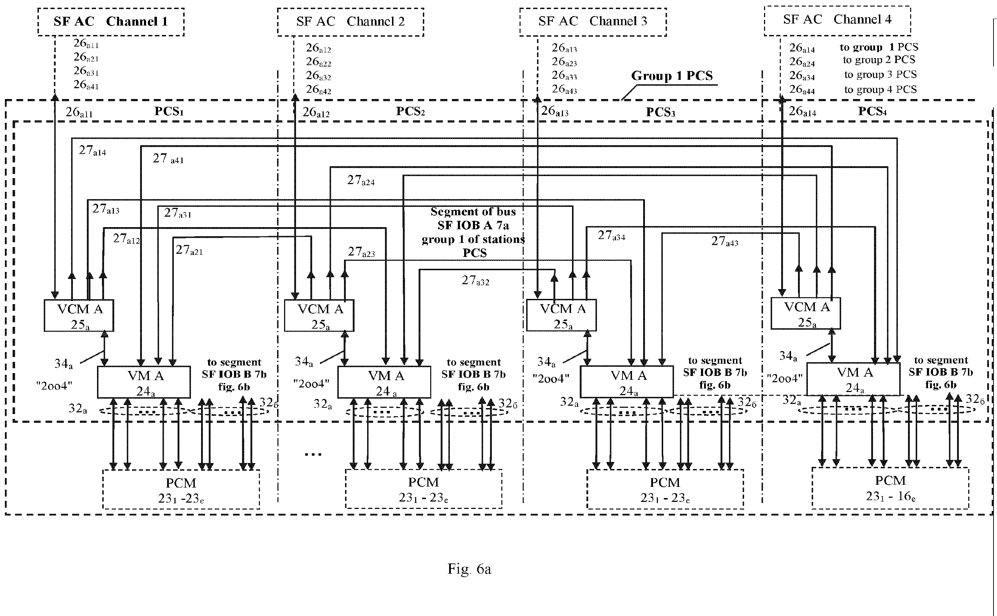

Figure 6a shows the structure of links via SF IOB A bus of subchannel A of each station of a group of 4 stations PCS1-4 of safety channels 1 - 4 with the controller SF AC A of their own safety channel and with controllers SF AC A of the other 3 safety channels, where: 24a is voting communication module VM A of subchannel A; 25a is communication module VCM A of subchannel A; 26 (26a11, 26a12, 26a13, 26a14) are communication lines via SF IOB A bus of modules VCM A of channels 1-4 stations with controllers SF AC A of its own safety channel; 27 (27a12, 27a13, 27a14, 27a21, 27a23 , 27a24, 27a31, 27a32, 27a34, 27a41, 27a42, 27a43) are interstation links of VCM A module of stations PCS1-4 of each channel 1-4 with modules VM A of the other 3 stations PCS of the group via SF IOB A bus; 32a are lines of VM A module 24a communication via SF IOB A bus 7a with PCM modules 231 - 23e of station PCS; 34a is a line of VCM A module 25a communication with VM A 24a module of its PCS station.

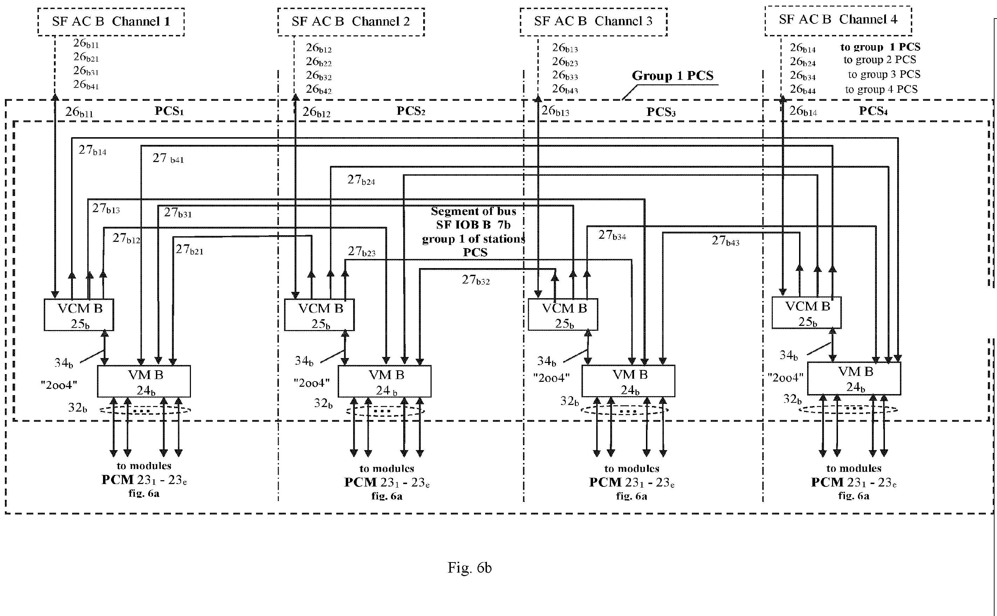

Figure 6b shows the structure of links via SF IOB B bus of subchannel B of each station of a group of 4 stations PCS1-4 of safety channels 1 - 4 with the controller SF AC B of their own safety channel and with controllers SF AC B of the other 3 safety channels, where: 24b is voting communication module VM B of subchannel B; 25b is communication module VCM B of subchannel B; 26 (26b11, 26b12, 26b13, 26b14) are communication lines via SF IOB B bus of modules VCM B of channels 1-4 stations with controllers SF AC B of its own safety channel; 27 (27b12, 27b13, 27b14, 27b21, 27b23 , 27b24, 27b31, 27b32, 27b34, 27b41, 27b42, 27b43) are interstation links of VCM B module of stations PCS1-4 of each channel 1 - 4 with modules VM B of the other 3 stations PCS of the group via SF IOB B bus; 32b are lines of VM B module 24b communication via SF IOB B bus 7b with PCM modules 231 - 23e of station PCS; 34b is a line of VCM B module 25b communication with VM B 24b module of its PCS station.

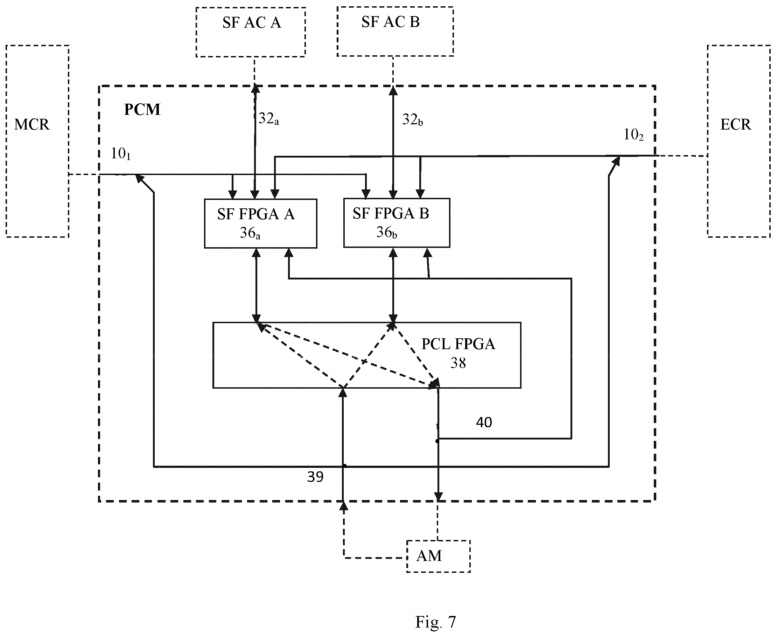

Figure 7 provides block diagram of a priority control module PCM, where: *10*₁ are wire lines of AM remote control from MCR; *10*₂ are wire lines of AM remote control from ECR; *32* is communication line of SF IOB A bus of subchannel A; *33* is communication line of SF IOB B bus of subchannel B; *36* is a programmable logic circuit SF PLC A of subchannel A; *37* is a programmable logic circuit SF PLC B of subchannel B; *38 is* a programmable logic circuit of priority control logic - PCL PLC; *39* is AM state signal input line; *40* is feedback link for polling on the state of control commands sent to AM .

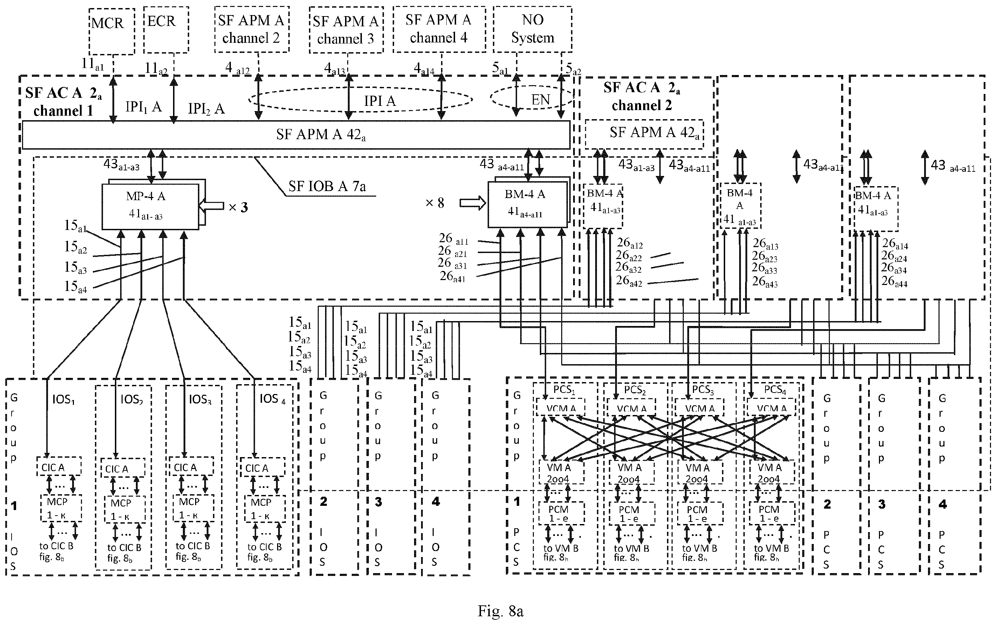

Figure 8a gives block diagram of SF AC A automation controller of subchannel A using the example of channel 1 SF AC A, where: 7a is a SF IOB A bus of subchannels A; 4a12, 4a13, 4a14 are interprocessor interfaces IPI A of subchannel A of channel 1 SF AC A communication with SF AC A of channels 2, 3, 4; 5a1, 5a2 is redundant bus EN of normal operation; 11a1, 11a2 are communication interfaces of SF APM A automation processor 42a of channel 1 via buses IPI1 A, IPI2 A of subchannel A, respectively, with MCR and ECR; 15a1, 15a2, 15a3, 15a4 are lines of communication of BM-4 A module 41a1, respectively, with IOS1, IOS2, IOS3, IOS4 stations of group 1 of each channel via SF IOB A bus; 41a1 - 41a3 are communication modules of BM-4 A of subchannel A of each channel 1, 2, 3, 4 for connection of processor module SF APM A with stations IOS1-4 of groups (1, 5, 9); (2, 6, 10); (3, 7, 11); (4, 8, 12), respectively; 26a11, 26a12, 26a13, 26a14 are communication lines of module BM-4 A 41a4 with stations PCS1-4 of group 1, respectively, channels 1, 2, 3, 4 via bus SF IOB A; 41a4 - 41a11 are communication modules BM-4 A of subchannel A for communication with stations PCS1-4 of groups 1-32; 42a is an automation processor module SF APM A of subchannel A; 43a1 - a11 are communication lines SF APM A with modules BM-4 A 41a1-a11.

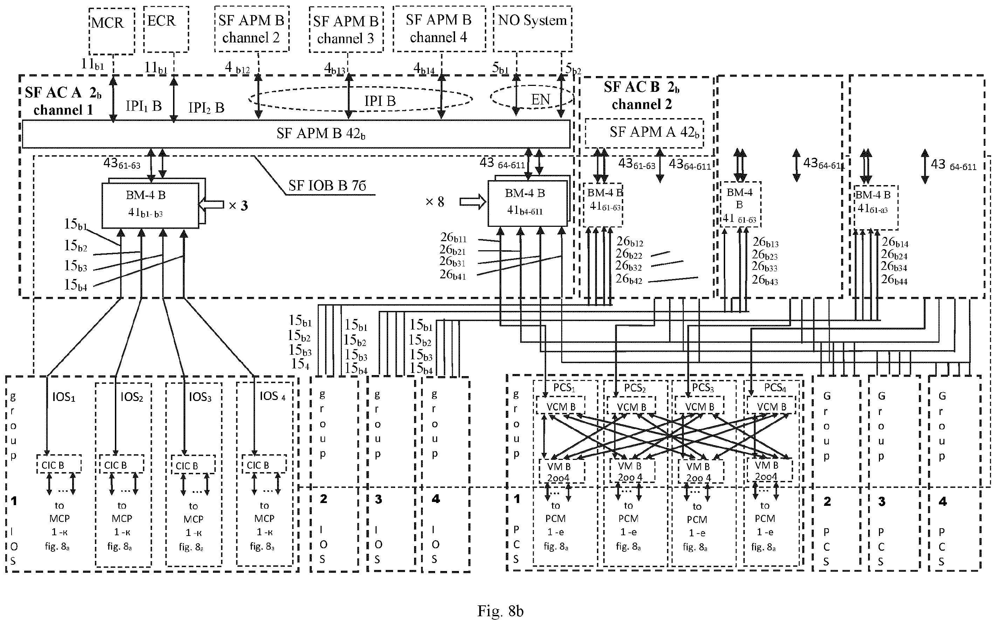

Figure 8b gives block diagram of SF AC B automation controller of subchannel B using the example of channel 1 SF AC B, where: 7b is a SF IOB B bus of subchannels A; 4b12, 4b13, 4b14 are interprocessor interfaces IPI B of subchannel B of channel 1 SF AC B communication with SF AC B of channels 2, 3, 4; 5b1, 5b2 is redundant bus EN of normal operation; 11b1, 11b2 are communication interfaces of SF APM B automation processor module 42b of channel 1 via buses IPI1 B, IPI2 B of subchannel B, respectively, with MCR and ECR; 15b1, 15b2, 15b3, 15b4 are lines of communication of BM-4 B module 41b1, respectively, with IOS1, IOS2, IOS3, IOS4 stations of group 1 of each channel via SF IOB B bus; 41b1 - 41b3 are communication modules of BM-4 B of subchannel B of each channel 1, 2, 3, 4 for connection of processor module SF APM B with stations IOS1-4 of groups (1, 5, 9); (2, 6, 10); (3, 7, 11); (4, 8, 12), respectively; 26b11, 26b12, 26b13, 26b14 are communication lines of module BM-4 B 41b4 with stations PCS1-4 of group 1, respectively, channels 1, 2, 3, 4 via bus SF IOB B; 41b4 - 41b11 are communication modules BM-4 B of subchannel B for communication with stations PCS1-4 of groups 1-32; 42b is an automation processor module SF APM B of subchannel B; 43b1 - b11 are communication lines SF APM B with modules BM-4 B 41b1 - b11.

CSS software & hardware complex schematically represented in Figures 1 and 2 using the example of 4-channel control safety system CSS operates in the following way.

I/O stations IOS₁₋ₙ of each safety channel receive analog and binary signals of the process, convert them into digital form, and transmit via safety I/O buses SF IOB A 7ₐ of subchannel A and SF IOB B *7_{b}* of subchannel B to automation controllers of the safety channel, respectively, SF AC A *2*ₐ of subchannel A and SF AC B *2*_{b} of subchannel B. Following commands of SF AC A *2*ₐ and SF AC B 2_{b}, stations IOS also generate and send control signals for CPS.

SF AC A *2*ₐ and SF AC B *2*_{b} controllers convert received digital values of analog and binary signals into the process parameters, transmit them via interprocessor interfaces, respectively, IPI *4*ₐ and IPI *4*_{b} to automation controllers SF AC A *2*ₐ and SF AC B *2*_{b} of the other safety channels, receive process parameters from these safety channels, and execute software-based selection of parameters for further processing according to majority algorithm '2 out of 4' at the first level of interchannel communications and majority redundancy. Automation controllers SF AC A *2*ₐ and SF AC B *2*_{b} compare selected according to the majority algorithm process parameters with the predetermined limits of nuclear power plant safe operation. Further processing of the process parameters received is executed at several stages of implementation of protection algorithms, including intermediate conversion of the results of processing, interchannel communications via IPI *4*ₐ and IPI *4*_{b} interfaces, and majority processing at every stage.

If SF AC A *2*ₐ and SF AC B *2*_{b} controllers detect an emergency situation as a result of analysis of input process parameters, they generate and send via SF IOB A *7*ₐ and SF IOB A *7*_{b} buses protective commands of AM control to the priority control stations PCS_{1 - m} *3* of their safety channel and to PCS stations 3 of other safety channels at the second level of interchannel communication.

If emergency situation requires reactor trip, then SF AC A *2*ₐ and SF AC B *2*_{b} generate and send via I/O buses, respectively, SF IOB A *7*ₐ and SF IOB A *7_{b}* to respective IOS stations control commands for CPS.

Automation controllers SF AC A *2*ₐ and SF AC B *2*_{b} in the process of operation generate and send to the upper level of the normal operation system via redundant switched bus EN 5 of normal operation diagnostic information about execution of protection functions and the state of SF AC A *2*ₐ and SF AC B *2*_{b}, and IOS/PCS stations. Reception of information in SF AC A *2*ₐ and SF AC B *2*_{b} via EN bus from normal operation system is blocked.

Priority control stations PCS1 - m 3 receive actuation mechanism control commands from SF AC A 2a and SF AC B 2b controllers of their own channel and of other safety channels via input-output buses SF IOB A 7a and SF IOB A 7b, and execute their hardware-based processing according to redundancy principle '2 out of 4' at the second level of interchannel communication and majority redundancy directly before their sending to the priority control modules PCM1-e of stations PCS1-m 3, which provides four-fold majority redundancy of software and hardware means of subchannels A and B from processor modules SF APM A, SF APM B to modules PCM1-e and the majority redundancy of software and hardware means, in addition to the first level, from input-output modules to processor modules SF APM A, SF APM B .

Based on the control commands selected according to majority algorithm '2 out of 4', the priority control modules PCM1-e of stations PCS1-m 3 generate control signals for actuation mechanisms AM 8 according to priorities of the control centers SF AC A 2a and SF AC B 2b. Control commands for AM 8 come to actuation mechanisms via gating circuits of modules PCS1-e opened following the commands from automation controllers SF AC A 2a and SF AC B 2b. Automation controllers read generated for AM commands and output control signals for AM via feedback links of priority control logic of modules PCM1-e and check whether prepared for sending to AM and sent to AM commands comply with the preset commands in order to exclude a possibility of sending false control signals to actuation mechanisms AM due to faults of modules PCM .

PCS1 - m 3 stations 3 of the safety channel receive also control commands from other control centers: main control room MCR and emergency control room ECR, and generate control signals for AM 8 according to priorities of the control centers.

MCR and ECR, according to Figure 2, are connected directly to PCS₁ - ₘ stations 3 of each safety channel via wire lines, and to SF AC A *2*ₐ and SF AC B *2*_{b} controllers via bus communication lines IPI₁ A *11*ₐ₁, IPI₁ B *11*_{b1} and IPI₂ A *11*ₐ₂, IPI₂ B *11*_{b2} built based on Ethernet 'point-to-point'-type interface and specific data-level communications protocol.

Via wire communication lines *10*₁, *10*₂, from MCR and ECR to PCS₁ - ₘ 3 binary control signals are transmitted, and from PCS_{1 - m} *3* to MCR and ECR analog and binary signals reflecting state of priority control stations and AM 8 are transmitted to be displayed on safety panels.

Via communication lines IPI₁ A *11*ₐ₁, IPI₁ B *11*_{b1} and IPI₂ A *11*ₐ₂, IPI₂ B *11*_{b2} from SF AC A *2*ₐ and SF AC B 2_{b} controllers of safety channels to the MCR and ECR diagnostic information about execution of protection algorithms and extended diagnostic information about the state of actuation mechanisms and priority control modules is transmitted.

Stations IOS₁₋ₙ *1* and PCS_{1 - m} 3 contain two independent sets of subchannel A and subchannel B software & hardware meeting diversity principle and implementing together with the two automation controllers SF AC A *2*ₐ of subchannel A and SF AC B *2*_{b} of subchannel B separately all functions of the safety system channel.

In IOS station, which structure is shown in Figure 3 using the example of IOS₁ station of channel 1, subchannels A and B are implemented in the form of two communication modules: CIC A *13* of SF IOB A bus *7ₐ* of subchannel A and CIC B *13* of SF IOB B bus *7_{b}* of subchannel B, and software & hardware of subchannels A and B integrated into MCP modules *12₁* - *12*ₖ. CIC A and CIC B modules are connected, respectively, via communication lines of SF IOB A *13* and SF IOB B *17* of 'point-to-point' type of serial duplex interface with each MCP module *12*₁ - *12*ₖ, and via communication lines of SF IOB A bus *15*₁ and SF IOB B *18*₁ of 'point-to-point' type - with automation controllers, respectively, SF AC A of subchannel A and SF AC B of subchannel B.

Communication modules CIC A *13* and CIC B *16* distribute commands and data coming via lines *15*₁ and *18*₁ from SF AC A and SF AC B controllers, respectively, to communication lines *14* and *17* with MCP modules, and concentrate data coming via lines *14* and *17* from MCP modules in lines *15*₁ and *18*₁ of IOS station communication with SF AC A and SF AC B. It means that via communication lines *15*₁ and *18*₁ of SF IOB A and SF IOB B an access to each MCP module of I/O station is implemented for data transmission and reception from SF AC.

Modules of communication with the process MCP *12*₁ - *12*ₖ execute reception and reproduction of analog and binary signals of the process, conversion of input signals of the process into digital form and digital values of output signals into analog form, preprocessing of input signals, communication with SF AC A and SF AC B controllers via communication lines, respectively, *14, 1*5*₁ and 17*, *18*₁ of buses SF IOB A *7*ₐ and SF IOB B *7_{b}.*

Figure 4 shows block diagram of analog signal input module MCP demonstrating arrangement of subchannels A and B hardware in MCP modules. Built-in hardware of subchannels is implemented in the module in the form of two processors SF CPU A *21* of subchannel A and SF CPU B *22* of subchannel B connected, respectively, via buses SF IOB A *14ₐ* and SF IOB B *14_{b}* with communication modules CIC A *13* and CIC B 16 (Figure 3), through which the access to these micro-controllers 21ₐ and 21_{b} from the side of SF AC A and SF AC B controllers is implemented via communication lines 15ₐ₁ and 15_{b1} (Figure 3) for data exchange.

Process signal comes in the analog signal input module MCP via input circuits *19* to the input of analog-to-digital converter ADC *20* that implements signal conversion into digital form. Processors SF CPU A *21* of subchannel A and SF CPU B *22* of subchannel B receive digital signal from ADC *20* output, execute its preprocessing and transmit it, respectively, via communication lines of SF IOB A *14ₐ* and SF IOB B *14_{b}* buses to communication modules CIC A *13* and CIC B *16* (Figures 3 and 4).

Binary signal input modules and analog and binary signal output modules operate according to similar scheme (Figure 4).

Arrangement of safety features of subchannels A and B of PCS station is represented using a variant of PCS station structure (Figure 5) being part of a group of 4 PCS_{1 - 4} stations, with which automation controllers SF AC of 4 channels execute data exchange via individual communication lines of the SF IOB bus. Safety features of subchannels A and B of the PCS station are implemented in the form of: two communication modules of majority voting according to '2 out of 4' algorithm VM A *24* of subchannel A and VM B *28* of subchannel B, two communication modules VCM A 25 of subchannel A and VCM B *29* of subchannel B, and hardware & software of subchannels A and B integrated into PCM modules *23₁-23ₑ.* Modules VM A and VM B are connected: via 'e' communication lines, respectively, *32* of SF IOB A *7ₐ* and *33* of SF IOB B *7_{b}* of 'point-to-point' type of serial duplex interface with each MCP module *23*₁-*23*ₑ; via communication lines *27* of SF IOB A *7ₐ* of subchannel A and *31* of SF IOB B *7_{b}* of subchannel B - with communication modules VCM A and VCM B of the 3 other PCS stations.

Communication modules VM A *24* and VM B *28* implement functions of branching of downstream commands and data, respectively, from SF AC A and SF AC B to PCM modules *23*₁ - *23*ₑ, and concentrating of upstream data from PCM modules *23*₁ - *23*ₑ to SF AC A and SF AC B, and also functions of hardware-based majority selection of downstream commands and data from 4 safety channels received via communication lines *34, 27* of SF IOB A *7ₐ* and via communication lines *35*, *31* of SF IOB B *7_{b}* according to majority processing algorithm '2 out of 4' for transmission to PCM modules *23*₁ - *23*ₑ.

Communication modules VCM A 25 of subchannel A and VCM B 29 of subchannel B are connected, respectively: via lines *34* of SF IOB A and *35* of SF IOB B with VM A communication modules *24* and VM B *28* of their PCS station; via communication lines *27* of SF IOB A and *31* of SF IOB B - with communication modules VM A and VM B of the other 3 stations of safety channel 1; via communication lines *26* and *30,* respectively, of buses SF IOB A *7ₐ* and SF IOB B *7_{b}* in PCS₁ station - with SF AC A and SF AC B of their own safety channel 1, and in the other 3 PCS stations - with SF AC A and SF AC B of their own safety channel.

Figure 6a shows structure of links via SF IOB A bus of subchannel A of the group of 4 stations PCS_{1 - 4} of safety channels 1-4 with SF AC A controllers of 4 safety channels. VCM A module of PCS₁ station of channel 1 via communication line 26ₐ₁₁ is connected with SF AC A controller of its channel 1, VCM A module of PCS₂ station of channel 2 via communication line 26ₐ₁₂ is connected with SF AC A controller of channel 2, VCM A module of PCS₃ station of channel 3 via communication line 26ₐ₁₃ is connected with SF AC A controller of channel 3, VCM A module of PCS₄ station of channel 4 via communication line 26ₐ₁₄ is connected with SF AC A controller of channel 4. VCM A module in each PCS_{1 - 4} station is connected with VM A modules of the other 3 PCS stations of the group: via communication lines 27ₐ₁₂, 27ₐ₁₃, 27ₐ₁₄ in PCS₁ stations of channel 1, via communication lines 27ₐ₂₁, 27 ₐ₂₃, 27ₐ₂₄ in PCS₂ station of channel 2, via communication lines 27ₐ₃₁, 27 ₐ₃₂, 27ₐ₃₄ in PCS₃ stations of channel 3, via communication lines 27ₐ₄₁, 27ₐ₄₂, 27ₐ₄₃ in PCS₄ stations of channel 4.

Via said links of SF IOB A bus the commands and data from SF AC A controller of each of 4 channels come to VM A24ₐ modules of each station of the group for execution of majority processing according to '2 out of 4' algorithm at the second level of majority redundancy and for transmission of the selected commands and data via 'e' communication lines 32ₐ of VM A 24ₐ modules to PCM modules 23₁ - 23ₑ.

Figure 6b shows structure of links via SF IOB B bus of subchannel B of a group of 4 stations PCS_{1 - 4} of safety channels 1-4 with SF AC B controllers of 4 safety channels. VCM B module of PCS₁ station of channel 1 via communication line 26_{b11} is connected with SF AC B controller of its channel 1, VCM B module of PCS₂ station of channel 2 via communication line 26_{b12} is connected with SF AC B controller of channel 2, VCM B module of PCS₃ station of channel 3 via communication line 26ₐ₁₃ is connected with SF AC B controller of channel 3, VCM B module of PCS₄ station of channel 4 via communication line 26_{b14} is connected with SF AC A controller of channel 4. VCM B module in each PCS_{1 - 4} station of the group is connected with VM B modules of the other 3 PCS stations of the group: via communication lines 27_{b12}, 27_{b13}, 27_{b14} in PCS₁ station of channel 1, via communication lines 27_{b21}, 27_{b23}, 27_{b24} in PCS₂ station of channel 2, via communication lines 27_{b31}, 27_{b32}, 27_{b34} in PCS₃ station of channel 3, via communication lines 27_{b41}, 27_{b42}, 27_{b43} in PCS₄ station of channel 4.
Via said links of SF IOB B bus the commands and data from SF AC B controller of each of 4 channels come to VM B 24_{b} modules of each station of the group for execution of majority processing according to '2 out of 4' algorithm at the second level of majority redundancy and for transmission of the selected commands and data via 'e' communication lines 32_{b} of VM B 24_{b} modules to PCM modules 23₁ - 23ₑ.

Figure 7 shows arrangement of the integrated features of subchannels A, B and communication with AM control centers in PCM modules using block diagram of PCM module.

PCM module executes AM control following initiating commands from several control centers: from SF AC A controller of subchannel A via VM A modules and via communication line 32ₐ of SF IOB A bus; from SF AC B controller of subchannel B via communication line 32_{b} of SF IOB B bus (Figures 5 and 7); from the MCR via wire lines 10₁ and from the ECR via wire lines 10₂. Via said links, transmission of PCM and AM state is executed, respectively, to SF AC A, SF AC B, MCR and ECR.

Generation of AM control commands and signals is implemented: following initiating commands from SF AC A, MCR and ECR in programmable logic circuit SF FGPA A 36ₐ of subchannel A, and following initiating commands from SF AC B, MCR and ECR in programmable logic circuit SF FGPA B 36_{b} of subchannel B. AM control commands from SF FGPA A 36ₐ and SF FGPA B 36_{b} come to FGPA of priority control logic - PCL FGPA 38, where selection of command is executed according to the priorities of the control centers, and transmission of the command (control signal) being executed to the AM via communication line 40. Via feedback line 40 from PCL FGPA output the programmable logic circuits of SF FGPA A 36ₐ and SF FGPA B 36_{b} (Figure 7) inquire for the state of the command sent to AM and compare it with the preset command in order to control the command transmission channel to the AM. Via input lines 39 SF FGPA A 36ₐ and SF FGPA B 36_{b} carry out control of the AM state.

Each safety channel contains 2 independent automation controllers: SF AC A of subchannel A and SF AC B of subchannel B.

Figure 8a shows block diagram of SF AC A of subchannel A of safety channel 1. SF AC A controllers of subchannels A of other safety channels are built according to the same scheme.

Automation processor module SF APM A 42ₐ of controller SF AC A *2*ₐ receives via SF IOB A bus 7ₐ digital values of the process parameters from MCP modules of IOS_{1 - n} stations of its safety channel, executes their processing, and in case of detecting emergency situation, in compliance with safety algorithms, generates and transmits via SF IOB A bus 7ₐ to PCM modules of PCS_{1 - m} stations of its own and other safety channels the protective action control commands.

In the process of execution of safety algorithms, SF APM A 42ₐ implements data exchange with SF APM A of other safety channels - 2, 3, and 4, respectively, via interprocessor interfaces IPI A 4ₐ₁₂, 4ₐ₁₃, 4ₐ₁₄ and executes majority processing of data from all safety channels according to '2 out of 4' algorithm at the first level of majority redundancy. Via interprocessor interfaces IPI₁ A 11ₐ₁, IPI₂ A 11ₐ₂ of communication with processor module SF APM A of the first safety channel, respectively, with MCR and ECR the processor module receives remote control commands from the MCR and ECR and transmits to the MCR and ECR diagnostic information about execution of protection algorithms. Via redundant bus EN 5ₐ₁, 5ₐ₂ the module SF APM A 42ₐ transmits diagnostic information of the safety system to the normal operation system.

Reception of data from IOS and PCS stations and transmission of commands and data to IOS stations, PCS processor module SF APM A 42ₐ is executed: via communication lines of input-output bus SF IOB A 43ₐ₁₋ₐ₁₁ with communication modules BM-4 A 41ₐ₁₋ₐ₁₁ of the automation controller SF AC A and then via communication lines of 3 modules BM-4 A 41ₐ₁₋ₐ₃ with communication modules CIC A 13ₐ (Figure 3) of stations IOS and via communication lines of 8 modules BM-4 A 41ₐ₄₋ₐ₁₁ with communication modules VCM A 25ₐ of stations PCS (Figure 5).

Each communication module BM-4 A 41ₐ₁₋ₐ₃ in Figure 8a of the controller SF AC A provides connection via 4 branching lines of one group of stations IOS_{1 - 4} of its own safety channel, i.e. consisting of stations IOS connected only with processor modules SF APM of one safety channel. Communication modules BM-4 A 41ₐ₁₋ₐ₃ of 4 safety channels provide, respectively, connection of up to 12 groups of stations PCS.

Each of 8 communication modules BM-4 A 41ₐ₄₋ₐ₁₁, connected in a similar way with the processor module SF APM A via lines SF IOB A 43_{a4.a11}, provide connection to modules SF APM A of 4 safety channels of up to 4 groups of stations PCS ₁₋₄. All 8 modules BM-4 A 41ₐ₄₋ₐ₁₁ of 4 safety channels provide connection to processor modules SF APM B of up to 32 groups of stations PCS_{1 - 4}.

Figure 8a shows, as an example, the detailed diagram of connection of module BM-4 A 41ₐ₁ of controller SF AC A 2ₐ of safety channels 1-4 to the first groups of 1-4 stations IOS₁₋₄ by one group from each safety channel and to modules MCP ₁₋ₖ of each station, and the detailed diagram of connection of module BM-4 A 41ₐ₄ of safety channels 1-4 to the first groups 1-4 of stations PCS₁₋₄ of this channel and to modules PCM _{1 - e} of each station.

Figure 8b shows block diagram of SF AC B of subchannel B of the 1st safety channel. SF AC B controllers of subchannels B of other safety channels are built according to the same scheme.

Automation processor module SF APM B 42_{b} of controller SF AC B 2_{b} receives via SF IOB B bus 7_{b} digital values of the process parameters from MCP modules of IOS_{1 - n} stations of its safety channel, executes their processing, and in case of detecting emergency situation, in compliance with safety algorithms, generates and transmits via SF IOB B bus 7_{b} to PCM modules of PCS_{1 - m} stations of its own and other safety channels the protective action control commands.

In the process of execution of safety algorithms, SF APM B 42_{b} implements data exchange with SF APM B of other safety channels - 2, 3, and 4, respectively, via interprocessor interfaces IPI B 4_{b12}, 4_{b13}, 4_{b14} and executes majority processing of data from all safety channels according to '2 out of 4' algorithm at the first level of majority redundancy. Via interprocessor interfaces IPI₁ B 11_{b1}, IPI₂ B 11_{b2} of communication with processor module SF APM B of the first safety channel, respectively, with MCR and ECR the processor module receives remote control commands from the MCR and ECR and transmits to the MCR and ECR diagnostic information about execution of protection algorithms. Via redundant bus EN 5_{b1}, 5_{b2}, the SF APM B 42_{b} module transmits the diagnostic information of the safety system to the normal operation system.

Reception of data from IOS and PCS stations and transmission of commands and data to IOS stations, PCS processor module SF APM B 42_{b} is executed: via communication lines of input-output bus SF IOB B 43_{b1-b11} with communication modules BM-4 B 41_{b1-b11} of the automation controller SF AC B and then via communication lines of 3 modules BM-4 B 41_{b1-b3} with communication modules CIC B 13_{b} (Figure 3) of stations IOS and via communication lines of 8 modules BM-4 B 41_{b4-b11} with communication modules VCM A 25_{b} of stations PCS (Figure 5).

Each communication module BM-4 B 41_{b1-b3} in Figure 8b of the controller SF AC B provides connection via 4 branching lines of one group of stations IOS_{1 - 4} of its own safety channel, i.e. consisting of stations IOS connected only with processor modules SF APM B of one safety channel. Communication modules BM-4 B 41_{b1-b3} of 4 safety channels provide, respectively, connection of up to 12 groups of stations PCS.

Each of 8 communication modules BM-4 B 41_{b4-b11}, connected in a similar way with the processor module SF APM B via lines SF IOB A 43_{b4-b11}, provide connection to modules SF APM B of 4 safety channels of up to 4 groups of stations PCS ₁₋₄. All 8 modules BM-4 B 41_{b4-b11} of 4 safety channels provide connection to processor modules SF APM B of up to 32 groups of stations PCS_{1 - 4}.
Figure 8b shows, as an example, the detailed diagram of connection of module BM-4 B 41_{b1} of controller SF AC A 2_{b} of safety channels 1-4 to the first groups of 1-4 stations IOS₁₋₄ by one group from each safety channel and to modules MCP ₁₋ₖ of each station, and the detailed diagram of connection of module BM-4 B 41_{b4} of safety channels 1-4 to the first groups 1-4 of stations PCS₁₋₄ of this channel and to modules PCM _{1 - e} of each station.

## Claims

1. Control safety system for use in nuclear plants, comprising:
a plurality of identical safety channels, each said channel includes process signal input/output stations IOS₁₋ₙ(1), actuation mechanism priority control stations PCS₁₋ₘ (3) that are connected with the main control room MCR and emergency control room ECR, safety features automation controller SF AC (2), safety features input/output bus SF IOB (7) for SF AC controller data exchange with IOS (1) and PCS stations (3), and is cross-connected with other safety channels by means of duplex optical fiber communication paths,
wherein said input/output stations IOS₁₋ₙ (1), said priority control stations PCS₁₋ₘ (3) and said safety feature automation controller SF AC (2) of each of N safety channels contain two mutually independent software & hardware sets: subchannel A and subchannel B built based on different hardware and software platforms according to the diversification principle; such that each subchannel implements all functions of a safety channel from input of process signals to output of actuation mechanism control and process signals;
**characterized in that**
each SF AC controller of the control safety system includes controller SF AC A (2a) of subchannel A and controller SF AC B (2b) of subchannel B, each of which is connected, respectively, with SF AC A (2a) and SF AC B (2b) controllers of other safety channels via interprocessor interfaces IPI A (4a) and IPI B (4b) of 'point-to-point' type built based on Ethernet interface and data-level communication protocol thus creating the first level of the majority redundancy according to the data selection function "2 out of 4" from the input-output modules of the own channel and other safety channels received from these channels via the interprocessor interfaces IPI A, IPI B;
controllers SF AC A (2a) and SF AC B (2b) are connected with the normal operation system via redundant switched system bus EN (5) of normal operation built based on Ethernet interface, ring structure of net switches (6) connection and data-level communications protocol, with the main control room MCR and emergency control room ECR via interprocessor interfaces IPI₁ A (11a1), IPI₁ B (11b1) and IPI₂ A (11a2), IPI₂ B (11b2), respectively, built based on 'point-to-point'-type interface and data-level communication protocol, with IOS_{1 - n} (1) and PCS_{1 - m} (3) stations of the safety channel and with PCS_{1 - m} stations (3) of other safety channels via I/O bus, respectively, SF IOB A (7a) of subchannel A and SF IOB B (7b) of subchannel B,
each of SF IOB A (7a) and SF IOB B (7b) buses has a 'tree'-type structure, the upper root node of which is, respectively, automation processor module SF APM A (42) of SF AC A controller (2a) and processor module SF APM B of SF AC B controller (2b), and the low end nodes are modules (12) of communication with the process MCP of IOS_{1 - n} stations (1) and priority control modules PCM (23) of PCS_{1 - m} stations (3), and intermediate nodes are communication modules built based on the hardware logics and FPGA and executing the functions of branching the downward command flow and data from root node - module SF APM to end nodes - module MCP, PCM, and the function of concentrating the upward data flow from modules MCP, PCM to module SF APM, links between modules in the nodes of SF IOB A busand links between modules in the nodes of SF IOB B bus are implemented as the lines of serial duplex 'point-to-point'-type interface executing functions of transmitting the downward command flow and data along one line and the upward data flow along the other line;
all modules are structurally made as unified replacement modules, and IOS station, PCS station and SF AC controller including SF AC A and SF AC B controllers - as unified crates located in individual cabinets for stations IOS_{1 - n}, stations PCS_{1 - m}, controllers SF AC, maximum 4 crates per cabinet according to N = 4 safety channels.

2. Control safety system for use in nuclear power plant according to claim 1,
**characterized in that** the I/O station contains modules of communication (12) with the process MCP₁₋ₖ and two communication modules - converters of interfaces: CIC A (13) of SF IOB A bus (7a) of subchannel A and CIC B of SF IOB B bus (7b) of subchannel B; eachCIC A module (13) and CIC B module are connected via one communication line (15, 18) of the module, respectively, via SF IOB A and SF IOB B bus, with its own automation controller SF AC A, SF AC B, and via k intra-station lines of branching (14, 17) with each MCP_{1 - k} module (12);
modules of communication (12) with the process MCP_{1 - k} contain internal diversification and redundancy means: safety features micro-controller SF MC A of subchannel A and micro-controller SF MC B of subchannel B, which are connected via communication modules CIC A and CIC B along one external line of SF IOB A and SF IOB B buses of these modules, respectively, to SF AC A (2a) of subchannel A and SF AC B (2b) of subchannel B.

3. Control safety system for use in nuclear power plant according to any of the preceding claims,
**characterized in that** each priority control station PCS (3) contains priority control modules PCM₁₋ₑ (23₁₋ₑ), communication modules of SF IOB A bus (7a) of subchannel A
voting switch module VCM A and voting module VM A and communication modules of SF IOB B bus of subchannel B: module VCM B and module VM B;
module VCM A distributes input commands of subchannel A via the branching lines to module VM A of its channel and other safety channels, module VCM B executes the same functions of communication with modules VM B,
modules VM A, VM-B select authentic commands from N = 4 safety channels according to "2 out of 4" rule; thus forming in each station PCS_{1 - m} the 2nd level of majority redundancy directly before transmission of the control command and data selected according to the voting rule to each module PCM₁₋ₑ of station PCS₁₋ₘ; stations PCS are combined in groups, a number of stations PCS in a group is determined by a number of safety channels N = 4, four stations PCS₁ - ₄ of group from the common number of stations PCS₁₋ₘ are connected with controllers SF AC A of subchannel A and SF AC B of subchannel B by segments of SF IOB A and SF IOB B bus individual for each group;
in subchannel A of safety channel 1 the first station PCS₁ of channel 1 in group 1 of the first stations of safety channels by out-group communication line outside cabinets SF IOB A is connected with controller SF AC A of its safety channel 1, the first stations PCS ₂₋₄ of safety channels 2 - 4 in group 1 are connected with controllers SF AC A of other safety channels 2 - 4 by out-group communication lines, communication module VCM A of each station PCS ₁₋₄ of a group by intra-station communication line is connected with voting switch module VM A of its station PCS and by intra-group communication lines inside cabinets with communication modules VM A of other stations PCS of a group, communication module VM A of each station PCS ₁₋₄ of a group is connected by branching lines SF IOB A with priority control modules PCM₁₋ₑ of this station;
in subchannel B of each safety channel the links of modules PCM₁₋ₑ, stations PCS ₁ - ₄ of group 1 of the first stations of safety channels 1 - 4 with automation controllers SF AC B of each safety channel by segment of SF IOB B bus are implemented similarly to links of group 1 of the first stations of safety channels 1 - 4 with automation controllers SF AC A of each safety channel by SF IOB A bus of subchannel A;
a group 2 of the second stations PCS _{1 - 4} of channels 1 - 4, a group 3 of the third stations PCS _{1 - 4} of channels 1 - 4, ..., are connected with controllers SF AC A of channels 1 - 4 by segments of SF IOB A bus individual for each group and with controllers SF AC B of channels 1 - 4 by segments of SF IOB B bus individual for each group the way a group 1 of the first stations PCS ₁ - ₄ is connected with controllers SF AC A of channels 1 - 4 by segment of SF IOB A bus and with controllers SF AC B of channels 1 - 4 by segment of SF IOB B bus;
priority control modules PCM₁₋ₑ of stations PCS contain internal diversity and redundancy features: FPGA of safety features SF FPGA A of subchannel A and SF FPGA B of subchannel B, which are cross-connected, respectively, by wire communication lines with modular MCR and emergency ECR control rooms via intra-station lines of SF IOB A bus with communication modules VM A of subchannel A and via intra-station lines of SF IOB B with communication modules VM B of subchannel B and execute algorithms of actuation mechanism (AM) control and adjustment, respectively, by commands from automation controllers SF AC A, SF AC B received by them through segments of SF IOB A, SF IOB B buses; creation, delivery and monitoring of AM control signals are carried out by the PCM module by commands from SF FPGA A, SF FPGA B according to priorities of subchannels A, B, set by the priority control logics in PCL FPGA.

4. Control safety system for use in nuclear power plant according to any of the preceding claims,
**characterized in that the** automation controller SF AC A (2a) of subchannel A of each safety channel contains automation processor module APM A (42) and p communication modules BM-4 A (41) of SF IOB A bus (7a) in amount of "p" set for definiteness of p = 11 max., connected via SF IOB A communication lines (26, 33) with processor modules SF APM A (42),
modules APM SF A of channels 1 - 4 are connected via their first communication modules BM-4 A: via 4 branching lines with communication modules CIC A of four stations IOS1 - 4 of groups 1 - 4 of their safety channels;
modules APM SF A of channels 1 - 4 are connected via their second, third communication modules BM-4 A with communication modules CIC A of the following groups: 5 - 8, 9 - 12 by 4 stations IOS in a group; providing along with the first modules BM-4 A the connection of up to 12 groups of stations IOS, i.e. up to 48 stations IOS, to modules APM SF A of four subchannels A;
modules APM SF A of channels 1 - 4 are connected via fourth communication modules BM-4 A: via first branching lines of these modules of SF IOB A bus with four modules VCM A of the first group of stations PCS1 - 4, via second branching lines of these modules of SF IOB A bus - with four modules VCM A of the second group of stations PCS1 - 4 , ... , via fourth branching lines - with four modules VCM A of the fourth group of stations PCS1 - 4;
modules APM SF A of channels 1 - 4 via the fifth - eleventh communication modules BM-4 A are connected via branching lines of these modules with modules VCM A of the fifth - thirty second group of stations PCS1-4, thus providing along with the fourth modules BM-4 A the connection of up to 32 groups of stations PCS, i.e. up to 128 stations PCS to modules APM SF A of four subchannels A;
automation controller SF AC B of subchannel B of each channel of the four-channel safety system contains automation processor module APM SF B and communication modules BM-4 B and SF IOB B buses in amount of "p", set for definiteness as p = 11 max., connected via communication lines of SF IOB B bus with automation processor module APM SF B;
modules APM SF B of channels 1 - 4 via their 3 communication modules BM-4 A are connected via 4 branching lines of each module, similar to modules APM SF A, with 12 groups of stations IOS;
modules APM SF B channels 1 - 4 via their 8 communication modules BM-4 B are connected via 4 branching lines of each module, similar to modules APM SF A, with 32 groups of stations PCS1 - 4.

## Patentansprüche

1. Sicherheitssteuerungssystem für den Einsatz in Kernkraftwerken, bestehend aus:
einer Vielzahl identischer Sicherheitskanäle. Jeder Kanal umfasst Prozesssignal-Ein-/Ausgabestationen IOS₁₋ₙ (1), Prioritätssteuerstationen für Betätigungsmechanismen PCS₁₋ₘ (3), die mit dem Hauptkontrollraum MCR und dem Notfallkontrollraum ECR verbunden sind, einen Sicherheitsautomatisierungscontroller SF AC (2), einen Sicherheits-Ein-/Ausgabebus SF IOB (7) für den Datenaustausch der SF AC-Controller mit IOS- (1) und PCS-Stationen (3) und ist über Duplex-Glasfaser-Kommunikationswege mit anderen Sicherheitskanälen verbunden,
dabei enthalten die Ein-/Ausgabestationen IOS₁₋ₙ (1), die Prioritätssteuerstationen PCS₁₋ₘ (3) und der Sicherheitsautomatisierungscontroller SF AC (2) jedes der N Sicherheitskanäle zwei voneinander unabhängige Software- und Hardware-Sets: Unterkanal A und Unterkanal B, die nach dem Diversifikationsprinzip auf unterschiedlichen Hardware- und Softwareplattformen basieren. Jeder Unterkanal implementiert alle Funktionen eines Sicherheitskanals, von der Eingabe der Prozesssignale bis zur Ausgabe der Steuer- und Prozesssignale des Betätigungsmechanismus.
**dadurch gekennzeichnet, dass**
jeder SF AC-Controller des Sicherheitssteuerungssystems den Controller SF AC A (2a) des Unterkanals A und den Controller SF AC B (2b) des Unterkanals B umfasst. Diese Controller sind jeweils über die Interprozessorschnittstellen IPI A (4a) und IPI B (4b) vom Typ "Punkt-zu-Punkt" auf Basis einer Ethernet-Schnittstelle und eines Datenkommunikationsprotokolls mit den Controllern SF AC A (2a) und SF AC B (2b) anderer Sicherheitskanäle verbunden. Dadurch wird die erste Ebene der Mehrheitsredundanz gemäß der Datenauswahlfunktion "2 aus 4" aus den Ein-/Ausgabemodulen des eigenen Kanals und anderer Sicherheitskanäle gebildet, die von diesen Kanälen über die Interprozessorschnittstellen IPI A und IPI B empfangen werden;
die Steuerungen SF AC A (2a) und SF AC B (2b) sind mit dem Normalbetriebssystem über einen redundanten geschalteten Systembus EN (5) verbunden, der auf einer Ethernet-Schnittstelle, einer Ringstruktur aus Netzschaltern (6) und einem Datenkommunikationsprotokoll basiert, mit der Hauptleitstelle MCR und der Notleitstelle ECR sind sie über die Interprozessorschnittstellen IPI₁A (11a1), IPI₁ B (11b1) bzw. IPI₂ A (11a2), IPI₂ B (11b2) verbunden, die auf einer Punkt-zu-Punkt-Schnittstelle und einem Datenkommunikationsprotokoll basieren. Mit den Stationen IOS_{1- n} (1) und PCS_{1 - m} (3) des Sicherheitskanals und mit den Stationen PCS_{1 - m} (3) anderer Sicherheitskanäle sind sie über den E/A-Bus SF IOB A (7a) des Unterkanals A und SF IOB B (7b) des Unterkanals B verbunden,
jeder der Busse SF IOB A (7a) und SF IOB B (7b) hat eine Baumstruktur, wobei der obere Wurzelknoten Dabei handelt es sich um das Automatisierungsprozessormodul SF APM A (42) des SF AC A-Controllers (2a) und das Prozessormodul SF APM B des SF AC B-Controllers (2b), die unteren Knoten sind Module (12) zur Kommunikation mit dem Prozess MCP der IOS₁₋ₙ₋Stationen (1) und den Prioritätssteuerungsmodulen PCM (23) der PCS₁₋ₘ-Stationen (3), die Zwischenknoten sind auf Hardwarelogik und FPGA basierende Kommunikationsmodule, die den abwärts gerichteten Befehlsfluss und die Daten vom Stammknoten - Modul SF APM - zu den Endknoten - Modul MCP, PCM - verzweigen und den aufwärts gerichteten Datenfluss von den Modulen MCP, PCM zum Modul SF APM konzentrieren, die Verbindungen zwischen den Modulen in den Knoten des SF IOB A-Busses und die Verbindungen zwischen den Modulen in den Knoten des SF IOB B-Busses sind als serielle Duplex-Punkt-zu-Punkt-Schnittstellenleitungen implementiert, die die Übertragung des abwärts gerichteten Befehlsflusses und der Daten auf der einen Leitung und des aufwärts gerichteten Datenflusses auf der anderen Leitung ermöglichen,
alle Module sind strukturell als einheitliche Austauschmodule ausgeführt, und IOS-Station, PCS-Station und SF AC-Controller einschließlich SF AC A- und SF AC B-Controller - als einheitliche Kisten in einzelnen Schränken für Stationen IOS₁₋ₙ, Stationen PCS₁₋ₘ, Controller SF AC, maximal 4 Kisten pro Schrank entsprechend N = 4 Sicherheitskanälen.

2. Sicherheitsleitsystem für den Einsatz in Kernkraftwerken nach Anspruch 1, **gekennzeichnet dadurch, dass** die E/A-Station Kommunikationsmodule (12) mit dem Prozess MCP1-k und zwei Kommunikationsmodule - Schnittstellenkonverter - enthält: CIC A (13) des SF IOB A-Busses (7a) des Unterkanals A und CIC B des SF IOB B-Busses (7b) des Unterkanals B. Jedes CIC A-Modul (13) und CIC B-Modul ist über jeweils eine Kommunikationsleitung (15, 18) des Moduls über die SF IOB A- und SF IOB B-Busse mit seinem eigenen Automatisierungscontroller SF AC A, SF AC B und über k stationsinterne Verzweigungsleitungen (14, 17) mit jedem MCP1-k-Modul (12) verbunden. Die Kommunikationsmodule (12) mit dem Prozess MCP1-k enthalten interne Diversifizierungs- und Redundanzmittel: Sicherheitsfunktionen des Mikrocontrollers SF MC A des Unterkanals A und des Mikrocontrollers SF MC B des Unterkanals B, die über die Kommunikationsmodule CIC A und CIC B entlang einer externen Leitung der Busse SF IOB A und SF IOB B dieser Module jeweils mit SF AC A (2a) des Unterkanals A und SF AC B (2b) des Unterkanals B verbunden sind.

3. Steuerungssicherheitssystem zur Verwendung in einem Kernkraftwerk nach einem der vorhergehenden Ansprüche,
**dadurch gekennzeichnet, dass** jede Prioritätssteuerstation PCS (3) Prioritätssteuermodule PCM₁₋ₑ (23₁₋ₑ), Kommunikationsmodule des SF IOB A-Busses (7a) des Unterkanals A,
ein Abstimmungsschaltmodul VCM A und ein Abstimmungsmodul VM A sowie Kommunikationsmodule des SF IOB B-Busses des Unterkanals B enthält: Modul VCM B und Modul VM B;
Modul VCM A verteilt Eingabebefehle des Unterkanals A über die Verzweigungsleitungen an Modul VM A seines Kanals und anderer Sicherheitskanäle, Modul VCM B führt dieselben Kommunikationsfunktionen mit Modulen VM B aus,
Module VM A, VM-B wählen authentische Befehle aus N = 4 Sicherheitskanälen gemäß der "2 aus 4"-Regel aus; dadurch wird in jeder Station PCS₁₋ₘ die 2. Ebene der Mehrheitsredundanz direkt vor der Übertragung des Steuerbefehls und der gemäß der Abstimmungsregel ausgewählten Daten an jedes Modul PCM₁₋ₑ der Station PCS₁₋ₘ gebildet; Stationen PCS sind in Gruppen zusammengefasst, die Anzahl der Stationen PCS in einer Gruppe wird durch die Anzahl der Sicherheitskanäle N = 4 bestimmt, vier Stationen PCS_{1 - 4} der Gruppe aus der gemeinsamen Anzahl der Stationen PCS₁₋ₘ sind mit den Controllern SF AC A des Unterkanals A und SF AC B des Unterkanals B durch für jede Gruppe individuelle Bussegmente SF IOB A und SF IOB B verbunden;
im Unterkanal A des Sicherheitskanals 1 ist die erste Station PCS₁ des Kanals 1 in Gruppe 1 der ersten Stationen der Sicherheitskanäle über eine gruppenexterne Kommunikationsleitung außerhalb der Schränke SF IOB A mit dem Controller SF AC A ihres Sicherheitskanals 1 verbunden, die ersten Stationen PCS ₂₋₄ der Sicherheitskanäle 2-4 in Gruppe 1 sind über gruppenexterne Kommunikationsleitungen mit den Controllern SF AC A der anderen Sicherheitskanäle 2-4 verbunden, das Kommunikationsmodul VCM A jeder Station PCS ₁₋₄ einer Gruppe ist über eine stationsinterne Kommunikationsleitung mit dem Abstimmungsschaltermodul VM A ihrer Station PCS und über gruppeninterne Kommunikationsleitungen innerhalb der Schränke mit den Kommunikationsmodulen VM A anderer Stationen PCS einer Gruppe verbunden, das Kommunikationsmodul VM A jeder Station PCS ₁₋₄ einer Gruppe ist über Verzweigungsleitungen SF IOB A mit den Prioritätssteuermodulen PCM₁₋ₑ dieser Station verbunden;
im Unterkanal B jedes Sicherheitskanals sind die Verbindungen der Module PCM₁₋ₑ, Stationen PCS ₁₋₄ der Gruppe 1 der ersten Stationen der Sicherheitskanäle 1-4 mit den Automatisierungscontrollern SF AC B jedes Sicherheitskanals über das Segment des Busses SF IOB B ähnlich wie die Verbindungen der Gruppe 1 der ersten Stationen der Sicherheitskanäle 1-4 mit den Automatisierungscontrollern SF AC A jedes Sicherheitskanals über den Bus SF IOB A des Unterkanals A implementiert;
eine Gruppe 2 der zweiten Stationen PCS ₁₋₄ der Kanäle 1-4, eine Gruppe 3 der dritten Stationen PCS ₁₋₄ der Kanäle 1-4, ... sind mit den Controllern SF AC A der Kanäle 1-4 durch Segmente des Busses SF IOB A, individuell für jede Gruppe, und mit den Controllern SF AC B der Kanäle 1-4 durch Segmente des Busses SF IOB B, individuell für jede Gruppe, auf die gleiche Weise verbunden, wie eine Gruppe 1 der ersten Stationen PCS ₁₋₄ mit den Controllern SF AC A der Kanäle 1-4 durch Segmente des Busses SF IOB A und mit den Controllern SF AC B der Kanäle 1-4 durch Segmente des Busses SF IOB B verbunden ist;
die Prioritätssteuermodule PCM₁₋ₑ der Stationen PCS enthalten interne Diversitäts- und Redundanzfunktionen: FPGA der Sicherheitsfunktionen SF FPGA A des Unterkanals A und SF FPGA B des Unterkanals B, die jeweils durch drahtgebundene Kommunikationsleitungen mit modularen MCR- und Notfall-ECR-Kontrollräumen über stationsinterne Leitungen des Busses SF IOB A mit Kommunikationsmodulen VM A des Unterkanals A und über stationsinterne Leitungen von SF IOB B mit Kommunikationsmodulen VM B des Unterkanals B verbunden sind und Algorithmen zur Steuerung und Einstellung des Betätigungsmechanismus (AM) durch Befehle von Automatisierungscontrollern SF AC A, SF AC B ausführen, die sie über Segmente der Busse SF IOB A, SF IOB B empfangen; Erstellung, Übermittlung und Überwachung von AM-Steuersignalen werden vom PCM-Modul durch Befehle von SF FPGA A, SF FPGA B entsprechend den Prioritäten der Unterkanäle A, B durchgeführt, die durch die Prioritätssteuerlogik in PCL FPGA festgelegt werden.

4. Sicherheitssteuerungssystem für den Einsatz in Kernkraftwerken nach einem der vorhergehenden Ansprüche,
**dadurch gekennzeichnet, dass** der Automatisierungscontroller SF AC A (2a) des Unterkanals A jedes Sicherheitskanals das Automatisierungsprozessormodul APM A (42) und p Kommunikationsmodule BM-4 A (41) des SF IOB A-Busses (7a) in einer Anzahl von "p" enthält, die für eine Bestimmtheit von p = max. 11 eingestellt sind. Diese sind über SF IOB A-Kommunikationsleitungen (26, 33) mit den Prozessormodulen SF APM A (42) verbunden,
die Module APM SF A der Kanäle 1-4 sind über ihre ersten Kommunikationsmodule BM-4 A verbunden: über vier Verzweigungsleitungen mit den Kommunikationsmodulen CIC A der vier Stationen IOS 1-4 der Gruppen 1-4 ihrer Sicherheitskanäle;
die Module APM SF A der Kanäle 1-4 sind über ihre zweiten und dritten Kommunikationsmodule BM-4 A mit den Kommunikationsmodulen CIC A der folgenden Gruppen verbunden: 5-8, 9-12 mit jeweils 4 IOS-Stationen in einer Gruppe. Zusammen mit den ersten Modulen BM-4 A ermöglichen sie den Anschluss von bis zu 12 IOS-Stationsgruppen, d. h. bis zu 48 IOS-Stationen, an die Module APM SF A der vier Unterkanäle A.
die Module APM SF A der Kanäle 1-4 sind über vierte Kommunikationsmodule BM-4 A verbunden: über erste Verzweigungsleitungen dieser Module des SF IOB A-Busses mit vier Modulen VCM A der ersten Stationsgruppe PCS ₁₋₄, über zweite Verzweigungsleitungen dieser Module des SF IOB A-Busses mit vier Modulen VCM A der zweiten Stationsgruppe PCS ₁₋₄, ..., über vierte Verzweigungsleitungen mit vier Modulen VCM A der vierten Stationsgruppe PCS 1-4;
die Module APM SF A der Kanäle 1-4 sind über das fünfte-elfte Kommunikationsmodul BM-4 A über Verzweigungsleitungen dieser Module mit den Modulen VCM A der fünften-zweiunddreißigsten Gruppe von Stationen PCS 1-4 verbunden und ermöglichen so zusammen mit dem vierten Modul BM-4 A den Anschluss von bis zu 32 Gruppen von Stationen PCS, d. h. bis zu 128 Stationen PCS an die Module APM SF A der vier Unterkanäle A;
der Automatisierungscontroller SF AC B des Unterkanals B jedes Kanals des vierkanaligen Sicherheitssystems enthält das Automatisierungsprozessormodul APM SF B und die Kommunikationsmodule BM-4 B und die Busse SF IOB B in einer Menge von "p", der Bestimmtheit halber auf p = max. 11 eingestellt, die über Kommunikationsleitungen des Busses SF IOB B mit dem Automatisierungsprozessormodul APM SF B verbunden sind;
Module APM SF B der Kanäle 1 - 4 sind über ihre 3 Kommunikationsmodule BM-4 A über 4 Abzweigleitungen jedes Moduls, ähnlich wie Module APM SF A, mit 12 Stationsgruppen IOS verbunden;
Module APM SF B der Kanäle 1 - 4 sind über ihre 8 Kommunikationsmodule BM-4 B über 4 Abzweigleitungen jedes Moduls, ähnlich wie Module APM SF A, mit 32 Stationsgruppen PCSI - 4 verbunden.

## Revendications

1. Système de sûreté de contrôle destiné à être utilisé dans des centrales nucléaires, comprenant :
une pluralité de canaux de sûreté identiques, chacun desdits canaux comprenant des stations d'entrée/sortie de signaux de processus IOS₁₋ₙ (1), des stations de contrôle de priorité des mécanismes d'actionnement PCS₁₋ₘ (3) qui sont connectées à la salle de contrôle principale MCR et à la salle de contrôle d'urgence ECR, un contrôleur d'automatisation des fonctions de sûreté SF AC (2), un bus d'entrée/sortie de fonctions de sûreté SF IOB (7) pour l'échange de données entre le contrôleur SF AC et les stations IOS (1) et PCS (3), et est interconnecté avec d'autres canaux de sûreté au moyen de chemins de communication à fibres optiques duplex,
dans lequel
lesdites stations d'entrée/sortie IOS₁₋ₙ (1), lesdites stations de contrôle de priorité PCS₁₋ₘ (3) et ledit contrôleur d'automatisation des fonctions de sûreté SF AC (2) de chacun des N canaux de sûreté contiennent deux ensembles logiciels et matériels mutuellement indépendants : sous-canal A et sous-canal B, construits sur des plateformes matérielles et logicielles différentes selon le principe de diversification ;
de sorte que chaque sous-canal met en œuvre toutes les fonctions d'un canal de sûreté depuis l'entrée des signaux de processus jusqu'à la sortie des commandes de mécanismes d'actionnement et des signaux de processus;
**caractérisé en ce que**
chaque contrôleur SF AC du système de sûreté comprend un contrôleur SF AC A (2a) du sous-canal A et un contrôleur SF AC B (2b) du sous-canal B, chacun étant connecté, respectivement, aux contrôleurs SF AC A (2a) et SF AC B (2b) des autres canaux de sûreté via des interfaces interprocesseurs IPI A (4a) et IPI B (4b) de type "point à point" basées sur une interface Ethernet et un protocole de communication au niveau des données, créant ainsi un premier niveau de redondance majoritaire selon la fonction de sélection de données "2 parmi 4" à partir des modules d'entrée-sortie du canal propre et des autres canaux de sûreté reçus via les interfaces interprocesseurs IPI A, IPI B;
les contrôleurs SF AC A (2a) et SF AC B (2b) sont connectés au système de fonctionnement normal via un bus système commuté redondant EN (5) de fonctionnement normal basé sur l'interface Ethernet, une structure en anneau de connexions des commutateurs réseau (6) et un protocole de communication au niveau des données, à la salle de contrôle principale MCR et à la salle de contrôle d'urgence ECR via les interfaces interprocesseurs IPI₁ A (11a1), IPI₁B (11b1) et IP1₂ A (11a2), IPI₂ B (11b2), respectivement, basées sur une interface de type "point à point" et un protocole de communication au niveau des données, aux stations IOS₁₋ₙ (1) et PCS₁₋ₘ (3) du canal de sûreté ainsi qu'aux stations PCS1-m (3) des autres canaux de sûreté via les bus d'E/S SF IOB A (7a) du sous-canal A et SF IOB B (7b) du sous-canal B, respectivement ;
chaque bus SF IOB A (7a) et SF IOB B (7b) a une structure de type "arbre", dont le nœud racine supérieur est respectivement le module processeur d'automatisation SF APM A (42) du contrôleur SF AC A (2a) et le module processeur SF APM B du contrôleur SF AC B (2b), et dont les nœuds terminaux inférieurs sont des modules (12) de communication avec le processus MCP des stations IOS₁₋ₙ (1) et des modules de contrôle de priorité PCM (23) des stations PCS₁₋ₘ (3), et les nœuds intermédiaires sont des modules de communication basés sur des logiques matérielles et FPGA, exécutant les fonctions de distribution du flux de commande descendant et des données depuis le nœud racine - le module SF APM - vers les nœuds terminaux - modules MCP, PCM, ainsi que la fonction de concentration du flux de données ascendant des modules MCP, PCM vers le module SF APM ;
les liaisons entre les modules des nœuds du bus SF IOB A et les liaisons entre les modules des nœuds du bus SF IOB B sont mises en œuvre sous forme de lignes d'interface duplex série de type "point à point" exécutant les fonctions de transmission du flux de commande descendant et de données sur une ligne et du flux de données ascendant sur l'autre ligne;
tous les modules sont structurellement réalisés comme des modules remplaçables unifiés, et la station IOS, la station PCS et le contrôleur SF AC incluant les contrôleurs SF AC A et SF AC B - comme des châssis unifiés situés dans des armoires individuelles pour les stations IOS₁₋ₙ, les stations PCS₁₋ₘ, les contrôleurs SF AC, avec un maximum de 4 châssis par armoire selon N = 4 canaux de sûreté.

2. Système de contrôle de sécurité destiné à être utilisé dans une centrale nucléaire selon la revendication 1,
**caractérisé en ce que** la station d'E/S contient des modules de communication (12) avec le processus MCP₁₋ₖ et deux modules de communication - convertisseurs d'interface: CIC A (13) du bus SF IOB A (7a) du sous-canal A et CIC B du bus SF IOB B (7b) du sous-canal B; chaque module CIC A (13) et CIC B est connecté, respectivement, via une ligne de communication (15, 18) du module, au moyen du bus SF IOB A et SF IOB B, à son propre contrôleur d'automatisation SF AC A, SF AC B, et via k lignes de branchement intra-station (14, 17) à chacun des modules MCP₁₋ₖ (12);
les modules de communication (12) avec le processus MCP₁₋ₖ comprennent des moyens internes de diversification et de redondance: un microcontrôleur de fonctions de sécurité SF MC A pour le sous-canal A et un microcontrôleur SF MC B pour le sous-canal B, lesquels sont connectés, respectivement, via les modules de communication CIC A et CIC B, par une ligne externe unique des bus SF IOB A et SF IOB B de ces modules, aux contrôleurs SF AC A (2a) du sous-canal A et SF AC B (2b) du sous-canal B.

3. Système de contrôle de sécurité destiné à une utilisation dans une centrale nucléaire selon l'une quelconque des revendications précédentes,
**caractérisé en ce que** chaque station de contrôle prioritaire PCS (3) contient les modules de contrôle prioritaire PCM₁₋ₑ (23₁₋ₑ), les modules de communication du bus SF IOB A (7a) du sous-canal A
le module de commutation de vote VCM A et le module de vote VM A, ainsi que les modules de communication du bus SF IOB B du sous-canal B : module VCM B et module VM B;
le module VCM A distribue les commandes d'entrée du sous-canal A via les lignes de dérivation au module VM A de son canal et aux autres canaux de sécurité, le module VCM B exécute les mêmes fonctions de communication avec les modules VM B,
les modules VM A et VM-B sélectionnent les commandes authentiques parmi N = 4 canaux de sécurité selon la règle «2 sur 4»; ainsi, dans chaque station PCS₁₋ₘ, le deuxième niveau de redondance majoritaire est formé juste avant la transmission des commandes de contrôle et des données sélectionnées selon la règle de vote à chaque module PCM₁₋ₑ de la station PCS₁₋ₘ; les stations PCS sont combinées en groupes, le nombre de stations PCS dans un groupe est déterminé par le nombre de canaux de sécurité N = 4, quatre stations PCS_{1 - 4} du groupe du nombre commun de stations PCS₁₋ₘ sont connectées aux contrôleurs SF AC A du sous-canal A et SF AC B du sous-canal B par des segments de bus SF IOB A et SF IOB B individuels pour chaque groupe;
dans le sous-canal A du canal de sécurité 1, la première station PCS₁ du canal 1 du groupe 1 des premières stations des canaux de sécurité par une ligne de communication hors groupe à l'extérieur des armoires SF IOB A est connectée au contrôleur SF AC A de son canal de sécurité 1, les premières stations PCS₂₋₄ des canaux de sécurité 2-4 du groupe 1 sont connectées aux contrôleurs SF AC A des autres canaux de sécurité 2-4 par des lignes de communication hors groupe, le module de communication VCM A de chaque station PCS₁₋₄ d'un groupe par ligne de communication intra-station est connecté au module de commutation de vote VM A de sa station PCS et par des lignes de communication intra-groupe à l'intérieur des armoires avec les modules de communication VM A des autres stations PCS d'un groupe, le module de communication VM A de chaque station PCS₁₋₄ d'un groupe est connecté par des lignes de dérivation SF IOB A aux modules de contrôle de priorité PCM₁₋ₑ de cette station;
dans le sous-canal B de chaque canal de sécurité, les liaisons des modules PCM₁₋ₑ, stations PCS _{1 - 4} du groupe 1 des premières stations des canaux de sécurité 1 - 4 avec les contrôleurs d'automatisation SF AC B de chaque canal de sécurité par segment du bus SF IOB B sont réalisées de manière similaire aux liaisons du groupe 1 des premières stations des canaux de sécurité I - 4 avec les contrôleurs d'automatisation SF AC A de chaque canal de sécurité par le bus SF IOB A du sous-canal A;
un groupe 2 des deuxièmes stations PCS _{1- 4} des canaux 1 - 4, un groupe 3 des troisièmes stations PCS _{1 - 4} des canaux 1 - 4, ..., sont connectés aux contrôleurs SF AC A des canaux 1 - 4 par des segments de bus SF IOB A individuels pour chaque groupe et aux contrôleurs SF AC B des canaux 1 - 4 par des segments de bus SF IOB B individuels pour chaque groupe de la manière dont un groupe 1 des premières stations PCS _{1 - 4} est connecté aux contrôleurs SF AC A des canaux 1 - 4 par segment de bus SF IOB A et aux contrôleurs SF AC B des canaux 1 - 4 par segment de bus SF IOB B;
les modules de contrôle de priorité PCM₁₋ₑ des stations PCS contiennent des fonctions internes de diversité et de redondance: FPGA des fonctions de sécurité SF FPGA A du sous-canal A et SF FPGA B du sous-canal B, qui sont interconnectés, respectivement, par des lignes de communication filaires avec les salles de contrôle modulaires MCR et ECR d'urgence via des lignes intra-station du bus SF IOB A avec des modules de communication VM A du sous-canal A et via des lignes intra-station du SF IOB B avec des modules de communication VM B du sous-canal B et exécutent des algorithmes de contrôle et de réglage du mécanisme d'actionnement (AM), respectivement, par des commandes des contrôleurs d'automatisation SF AC A, SF AC B reçues par eux via des segments des bus SF IOB A, SF IOB B; la création, la livraison et la surveillance des signaux de contrôle AM sont effectuées par le module PCM par des commandes de SF FPGA A, SF FPGA B selon les priorités des sous-canaux A, B, définies par les logiques de contrôle de priorité dans PCL FPGA.

4. Système de contrôle de sécurité destiné à être utilisé dans une centrale nucléaire selon l'une quelconque des revendications précédentes,
**caractérisé en ce que** le contrôleur d'automatisation SF AC A (2a) du sous-canal A de chaque canal de sécurité contient un module de traitement d'automatisation APM A (42) et p modules de communication BM-4 A (41) du bus SF IOB A (7a) d'un nombre «p» défini pour une précision de p = 11 maximum, connectés via les lignes de communication SF IOB A (26, 33) aux modules de traitement SF APM A (42),
modules APM SF A des canaux 1 à 4 sont connectés via leurs premiers modules de communication BM-4 A: via quatre lignes de dérivation aux modules de communication CIC A des quatre stations IOS 1 à 4 des groupes 1 à 4 de leurs canaux de sécurité;
modules APM SF A des canaux 1 à 4 sont connectés via leurs deuxième et troisième modules de communication BM-4 A aux modules de communication CIC A des groupes 5 à 8, 9 à 12, répartis sur 4 stations IOS, avec les premiers modules BM-4 A, ils permettent de connecter jusqu'à 12 groupes de stations IOS, soit jusqu'à 48 stations IOS, aux modules APM SF A des quatre sous-canaux A;
modules APM SF A des canaux 1 à 4 sont connectés via des quatrièmes modules de communication BM-4 A: via les premières lignes de dérivation de ces modules du bus SF IOB A à quatre modules VCM A du premier groupe de stations PCS 1 à 4; via les deuxièmes lignes de dérivation de ces modules du bus SF IOB A à quatre modules VCM A du deuxième groupe de stations PCS 1 à 4,..., via les quatrièmes lignes de dérivation à quatre modules VCM A du quatrième groupe de stations PCS 1 à 4;
modules APM SF A des canaux 1 - 4 via les cinquième - onzième modules de communication BM-4 A sont connectés via des lignes de dérivation de ces modules avec les modules VCM A du cinquième - trente-deuxième groupe de stations PCS 1-4, permettant ainsi avec les quatrième modules BM-4 A la connexion de jusqu'à 32 groupes de stations PCS, soit jusqu'à 128 stations PCS aux modules APM SF A de quatre sous-canaux A;
contrôleur d'automatisation SF AC B du sous-canal B de chaque canal du système de sécurité à quatre canaux contient le module de processeur d'automatisation APM SF B et les modules de communication BM-4 B et les bus SF IOB B en quantité "p", définie pour la précision comme p = 11 max., connectés via les lignes de communication du bus SF IOB B au module de processeur d'automatisation APM SF B;
modules APM SF B des canaux 1 - 4 via leurs 3 modules de communication BM-4 A sont connectés via 4 lignes de dérivation de chaque module, similaires aux modules APM SF A, avec 12 groupes de stations IOS;
modules APM SF B des canaux 1 - 4 via leurs 8 modules de communication BM-4 B sont connectés via 4 lignes de dérivation de chaque module, similaires aux modules APM SF A, avec 32 groupes de stations PCSI - 4.
